(19) Europäisches Patentamt
European Patent Office
Office européen des brevets

(11) **EP 4 644 966 A2**

(12) **EUROPEAN PATENT APPLICATION**

(43) Date of publication:
**05.11.2025 Bulletin 2025/45**

(21) Application number: **25196859.0**

(22) Date of filing: **19.08.2025**

(51) International Patent Classification (IPC):
**G02B 13/00** (2006.01)    **G02B 13/18** (2006.01)
**G02B 15/14** (2006.01)

(52) Cooperative Patent Classification (CPC):
**G02B 13/004; G02B 13/0065; G02B 13/009;
G02B 13/18; G02B 15/1421**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(71) Applicant: **Jiangxi OFILM Optical Co., Ltd.
Nanchang, Jiangxi 330096 (CN)**

(72) Inventors:
• ZHANG, Chenglin
  Nanchang City, 330096 (CN)
• LIU, Binbin
  Shenzhen, 518106 (CN)

(74) Representative: **Metida
Gyneju str. 16
01109 Vilnius (LT)**

(54) **OPTICAL SYSTEM, CAMERA MODULE, AND ELECTRONIC DEVICE**

(57)    An optical system, a camera module, and an electronic device are provided. The optical system includes a first lens, a second lens, a third lens, and a fourth lens that are sequentially arranged. The first lens and the second lens form a first lens group. The third lens and the fourth lens form a second lens group. The first lens group is fixed relative to an imaging plane of the optical system, the second lens group can move along the optical axis between the first lens group and the imaging plane of the optical system. The optical system satisfies following relationships: 14deg<FOV<30deg, and 2<FNO<3.5. The optical system, the camera module, and the electronic device of the present disclosure can achieve miniaturization design, and can reduce the difficulty of zoom design and achieve mass production.

**FIG. 1A**

**Description**

**FIELD**

The subject matter relates to field of optical imaging, and more particularly, to an optical system, a camera module, and an electronic device.

**BACKGROUND**

With increasing demand for miniaturization of smart terminals such as mobile phones and tablet computers, the design for optical systems in the mobile phones and the tablet computers also meet challenges. In related arts, the optical system may achieve zooming capability by moving the entire camera through a focusing motor. However, the above manner is discontinuous focusing, wherein when the camera realizes focusing under the function of the motor, a height of the camera changes accordingly. Another manner is to achieve optical zooming by moving multiple lens groups in the camera together, but a movement space is required. Thus, due to the limited size of the smart terminal such as mobile phone and tablets computer, the above optical zooming by moving the lens groups together is difficult to design, and mass produce is difficult to realize.

**SUMMARY**

The present disclosure discloses an optical system, a camera module, and an electronic device, which may reduce the difficulty of zooming and achieve mass production based on a miniaturization design.

A first aspect of the present disclosure provides an optical system consisting of fourth lenses having refractive power. From an object side to an image side along an optical axis of the optical system, the optical system sequentially includes a first lens group and a second lens group.

The first lens group includes a first lens and a second lens sequentially arranged from the object side to the image side along the optical axis. The first lens has positive refractive power, an object side surface of the first lens is convex near the optical axis, and the second lens has refractive power.

The second lens group includes a third lens and a fourth lens sequentially arranged from the object side to the image side along the optical axis. The third lens has negative refractive power, an object side surface of the third lens is convex near the optical axis, an image side of the third lens is concave near the optical axis, and the fourth lens has negative refractive power.

The first lens group is fixed relative to an imaging plane of the optical system. The second lens group is movable along the optical axis between the first lens group and the imaging plane of the optical system;

The optical system satisfies following relationships: 14deg<FOV<30deg, and 2<FNO<3.5. Wherein FOV is a maximum field of view of the optical system, and FNO is an F-number of the optical system.

A second aspect of the present disclosure provides a camera module, including an image sensor and an optical system mentioned in the first aspect. The image sensor is disposed at the image side of the optical system. The camera module including the above optical system may reduce the difficulty of zooming and achieve mass production based on a miniaturization design.

A third aspect of the present disclosure provides an electronic device, including a housing and a camera module mentioned in the second aspect. The camera module is arranged on the housing. The electronic device including the above camera module may reduce the difficulty of zooming and achieve mass production based on a miniaturization design.

The optical system of the present disclosure may reduce the difficulty of zooming and achieve mass production based on a miniaturization design. The present disclosure divides four lenses into a first lens group and a second lens group, the first lens group is fixed relative to the imaging plane of the optical system, and the second lens group can move along the optical axis between the first lens group and the imaging plane of the optical system, thereby enabling the optical system to have continuous internal focusing function. By moving the second lens group only, the burden of the optical system on the motor may be reduced, thereby achieving fast internal focusing of the optical system even when the motor has a lower power. Additionally, the difficulty of zooming may be reduced, and mass production may be realized.

Furthermore, the present disclosure designs the refractive power and the surface shape of the four lenses. The four lenses with refractive power evenly distribute the burden of light refraction to each lens, thereby reducing the workload of a single lens for bending light and avoiding excessive bending of the lens that will increase tolerance sensitivity. Specifically, the first lens has positive refractive power, and the object side surface of the first lens near the optical axis is convex, thereby facilitating the light travelling into the first lens. The second lens has refractive power, which may correct the aberration generated by the first lens and improve the imaging quality of the optical system. The third lens has negative refractive power, and the object side surface and the image side surface of the third lens are convex and concave, respectively, near the optical axis, thereby reducing the incident angle of light entering the optical system and allowing more light to enter the optical system. The fourth lens has negative refractive power, which may correct the spherical aberration, coma aberration, and distortion generated by the first lens group, thereby further improving the imaging quality of the optical system.

In addition, the optical system satisfies the relationships: 14deg<FOV<30deg, and 2<FNO<3.5, which enable the optical system to have an appropriate angle of view such that the optical system can be applied in telephoto fields. At the same time, the optical system may also balance between illumination and depth of field, and the amount of incoming light may be increased to further improve the imaging quality.

## BRIEF DESCRIPTION OF THE DRAWINGS

Implementations of the present technology will now be described, by way of embodiment, with reference to the attached figures. Obviously, the drawings are only some embodiments of the present disclosure. For those ordinary skilled in the art, other drawings can be obtained based on these drawings without creative work.

FIG. 1A is a schematic diagram of an optical system in a telephoto state according to a first embodiment of the present disclosure.

FIG. 1B shows a longitudinal spherical aberration diagram (mm), an astigmatism diagram (mm), and a distortion diagram (%) of the optical system in the telephoto state according to the first embodiment.

FIG. 2A is a schematic diagram of the optical system in a short focal state according to the first embodiment of the present disclosure.

FIG. 2B shows a longitudinal spherical aberration diagram (mm), an astigmatism diagram (mm), and a distortion diagram (mm) of the optical system in the short focal state according to the first embodiment of the present disclosure.

FIG. 2C is a schematic diagram showing an optical path of the optical system in the telephoto state according to the first embodiment of the present disclosure.

FIG. 2D is a schematic diagram showing an optical path of the optical system in the short focal state according to the first embodiment of the present disclosure.

FIG. 2E is a schematic diagram showing another optical path of the optical system according to the first embodiment of the present disclosure.

FIG. 2F is a schematic diagram showing another optical path of the optical system according to the first embodiment of the present disclosure.

FIG. 3A is a schematic diagram of an optical system in a telephoto state according to a second embodiment of the present disclosure.

FIG. 3B shows a longitudinal spherical aberration diagram (mm), an astigmatism diagram (mm), and a distortion diagram (%) of the optical system in the telephoto state according to the second embodiment of the present disclosure.

FIG. 4A is a schematic diagram of the optical system in a short focal state according to the second embodiment of the present disclosure.

FIG. 4B shows a longitudinal spherical aberration diagram (mm), an astigmatism diagram (mm), and a distortion diagram (mm) of the optical system in the short focal state according to the second embodiment of the present disclosure.

FIG. 5A is a schematic diagram of an optical system in a telephoto state according to a third embodiment of the present disclosure.

FIG. 5B shows a longitudinal spherical aberration diagram (mm), an astigmatism diagram (mm), and a distortion diagram (%) of the optical system in the telephoto state according to the third embodiment.

FIG. 6A is a schematic diagram of the optical system in a short focal state according to the third embodiment of the present disclosure.

FIG. 6B shows a longitudinal spherical aberration diagram (mm), an astigmatism diagram (mm), and a distortion diagram (mm) of the optical system in the short focal state according to the third embodiment of the present disclosure.

FIG. 7A is a schematic diagram of an optical system in a telephoto state according to a fourth embodiment of the present disclosure.

FIG. 7B shows a longitudinal spherical aberration diagram (mm), an astigmatism diagram (mm), and a distortion diagram (%) of the optical system in the telephoto state according to the fourth embodiment.

FIG. 8A is a schematic diagram of the optical system in a short focal state according to the fourth embodiment of the present disclosure.

FIG. 8B shows a longitudinal spherical aberration diagram (mm), an astigmatism diagram (mm), and a distortion diagram (mm) of the optical system in the short focal state according to the fourth embodiment of the present disclosure.

FIG. 9A is a schematic diagram of an optical system in a telephoto state according to a fifth embodiment of the present disclosure.

FIG. 9B shows a longitudinal spherical aberration diagram (mm), an astigmatism diagram (mm), and a distortion diagram (%) of the optical system in the telephoto state according to the fifth embodiment.

FIG. 10A is a schematic diagram of the optical system in a short focal state according to the fifth embodiment of the present disclosure.

FIG. 10B a longitudinal spherical aberration diagram (mm), an astigmatism diagram (mm), and a distortion diagram (mm) of the optical system in the short focal state according to the fifth embodiment of the present disclosure.

FIG. 11A is a schematic diagram of an optical system in a telephoto state according to a sixth embodiment of the present disclosure.

FIG. 11B shows a longitudinal spherical aberration diagram (mm), an astigmatism diagram (mm), and a distortion diagram (%) of the optical system in the telephoto state according to the sixth embodiment.

FIG. 12A is a schematic diagram of the optical system in a short focal state according to the sixth embodiment of the present disclosure.

FIG. 12B shows a longitudinal spherical aberration diagram (mm), an astigmatism diagram (mm), and a distortion diagram (mm) of the optical system in the short focal state according to the sixth embodiment of the present disclosure.

FIG. 13A is a schematic diagram of an optical system in a telephoto state according to a seventh embodiment of the present disclosure.

FIG. 13B shows a longitudinal spherical aberration diagram (mm), an astigmatism diagram (mm), and a distortion diagram (%) of the optical system in the telephoto state according to the seventh embodiment.

FIG. 14A is a schematic diagram of the optical system in a short focal state according to the seventh embodiment of the present disclosure.

FIG. 14B shows a longitudinal spherical aberration diagram (mm), an astigmatism diagram (mm), and a distortion diagram (mm) of the optical system in the short focal state according to the seventh embodiment of the present disclosure.

FIG. 15A is a schematic diagram of an optical system in a telephoto state according to an eighth embodiment of the present disclosure.

FIG. 15B shows a longitudinal spherical aberration diagram (mm), an astigmatism diagram (mm), and a distortion diagram (%) of the optical system in the telephoto state according to the eighth embodiment.

FIG. 16A is a schematic diagram of the optical system in a short focal state according to the eighth embodiment of the present disclosure.

FIG. 16B shows a longitudinal spherical aberration diagram (mm), an astigmatism diagram (mm), and a distortion diagram (mm) of the optical system in the short focal state according to the eighth embodiment of the present disclosure.

FIG. 17A is a schematic diagram of an optical system in a telephoto state according to a ninth embodiment of the present disclosure.

FIG. 17B shows a longitudinal spherical aberration diagram (mm), an astigmatism diagram (mm), and a distortion diagram (%) of the optical system in the telephoto state according to the ninth embodiment.

FIG. 18A is a schematic diagram of the optical system in a short focal state according to the ninth embodiment of the present disclosure.

FIG. 18B shows a longitudinal spherical aberration diagram (mm), an astigmatism diagram (mm), and a distortion diagram (mm) of the optical system in the short focal state according to the ninth embodiment of the present disclosure.

FIG. 19 is a schematic diagram of a camera module provided by the present disclosure.

FIG. 20 is a schematic diagram of an electronic device provided by the present disclosure.

## DETAILED DESCRIPTION

Implementations of the present disclosure will now be described, by way of embodiments, with reference to the above figures. The embodiments are obviously a portion but not all of the embodiments of the present disclosure. Based on the embodiments of the present disclosure, other embodiments obtained by ordinary skill in the art without creative work will still fall within the scope of protection of the present disclosure.

In addition, the terms "first" and "second" are mainly used to distinguish between different devices, components, or portions (the specific types and structures may be the same or different), which are not intended to indicate or imply the relative importance and quantity of the indicated devices, components, or portions. Unless otherwise specified, the term "a plurality of" means two or more.

Implementations of the present disclosure will now be described, by way of embodiments, with reference to the above figures.

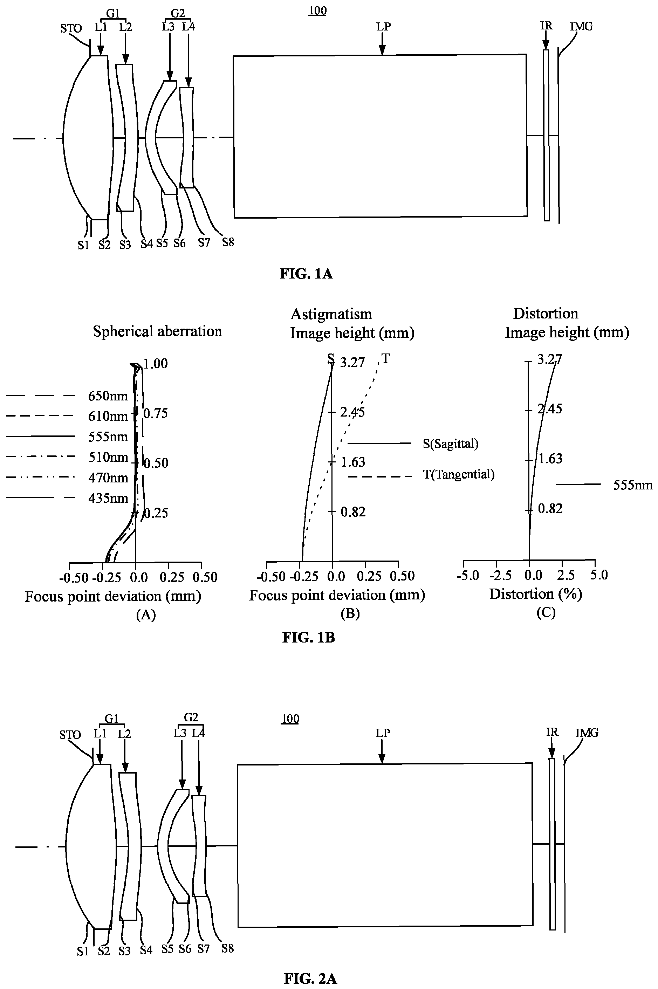

Referring to FIGS. 1A and 1B, a first aspect of the present disclosure provides an optical system 100. The optical system 100 includes a first lens group G1 and a second lens group G2 sequentially arranged along the optical axis from an object side to an image side. The first lens group G1 includes a first lens L1 and a second lens L2 sequentially arranged along the optical axis from the object side to the image side. The second lens group G2 includes a third lens L3 and a fourth lens L4 sequentially arranged along the optical axis from the object side to the image side. The first lens group G1 is fixed relative to an imaging plane IMG of the optical system 100. The second lens group G2 can move along the optical axis between the first lens group G1 and the imaging plane IMG of the optical system 100, thereby enabling the optical system 100 to achieve continuous internal focusing function. At the same time, by moving the second lens group G2 only, the difficulty of focusing design may be reduced, thereby facilitating mass production.

When the second lens group G2 moves along the optical axis between the first lens group G1 and the imaging plane IMG of the optical system 100, the optical system 100 switches between a short focal state and a telephoto state. When the optical system 100 is in the short focal state, the second lens group G2 is arranged away from the first lens group G1 along the optical axis. That is, the second lens group G2 is closer to the imaging plane IMG of the optical system. When the optical system 100 is in the telephoto state, the second lens group G2 is arranged closer to the first lens group G1 along the optical axis. That is, the second lens group G2 is further away from the imaging plane of the optical system 100.

Optionally, the first lens L1 has positive refractive power, which may compress the length of the lens groups of the optical system 100 near the object side along the optical axis, thereby reducing the thickness of the entire optical system 100 near the object side along the optical axis. The object side surface S1 of the first lens L1 is convex near the optical axis. Thus, the surface shape of the object side surface S1 of the first lens L1 may be adjusted, thereby enhancing the optical path control ability at the light incident surface of the first lens L1. The image side surface S2 of the first lens L1 may be convex or concave near the optical axis. Thus, the surface shape of the image side surface S2 of the first lens L1 may also be adjusted, thereby correcting aberration such as astigmatism.

Optionally, the second lens L2 may have positive or negative refractive power, thereby balancing the aberration caused by the compression of the lens groups of the optical system. The object side surface S3 of the second lens L2 may be convex or concave near the optical axis, and the image side surface S4 of the second lens L2 may also be convex or concave near the optical axis, thereby adjusting the travelling direction of the light and balance a volume configuration of the lens groups of the optical system at the object side.

Optionally, the third lens L3 may have negative refractive power, such that the third lens L3 may cooperate with the first lens group G1 to reduce coma aberration at the peripheral field of view. The object side surface S5 of the third lens L3 is convex near the optical axis, and the image side surface S6 is concave near the optical axis, thereby adjusting the surface shape of the third lens L3 to adjust the travelling direction of the light and increase the imaging plane.

Optionally, the fourth lens L4 may have negative refractive power, which may balance the aberration generated by the optical system. The object side surface S7 of the fourth lens L4 may be convex or concave near the optical axis, and the image side surface S8 of the fourth lens L4 may be convex or concave near the optical axis, thereby adjusting the surface shape of the fourth lens L4 to improve the light focusing performance of the central field of view.

The present disclosure provides exemplary embodiments for the refractive power and the surface design of each lens of the optical system 100. In other embodiments, the surface design and the refractive power of each lens of the optical system 100 may use other solutions. Any suitable combination is also feasible.

In some embodiments, the optical system 100 may be applied to electronic devices such as smart phones and tablet computers. Therefore, each of the first lens L1, the second lens L2, the third lens L3, and the fourth lens L4 may be made of plastic, thereby allowing the optical system 100 to be lightweight and facilitating complex processing of the surfaces of the lenses. In other embodiments, when the optical system 100 is applied to electronic devices such as car mounted devices, driving recorders used as a camera on a car, each of the first lens L1, the second lens L2, the third lens L3, and the fourth lens L4 may also be a glass lens, thereby improving the optical effect and reducing the temperature sensitivity of the optical system 100.

In some embodiments, the optical system 100 may further include a reflector LP. The reflector LP may be located between the image side surface S8 of the fourth lens L4 and the imaging plane IMG of the optical system 100. The reflector LP enables the optical system 100 to have different optical path directions, such that the configuration of the lens space is more flexible, thereby reducing mechanical limitations and achieve miniaturization design of the optical system 100.

Optionally, the quantity of the reflector(s) LP may be one or more, and each reflector LP may include a prism or a reflecting mirror. Taking the reflector LP being a prism as an example, the prism may bend the optical path at least twice, thereby extending the optical path in the optical system 100 and achieving a longer optical path in a limited lens space. Thus, the optical system 100 may meet telephoto requirements, and can be applied in a miniaturized intelligent terminal.

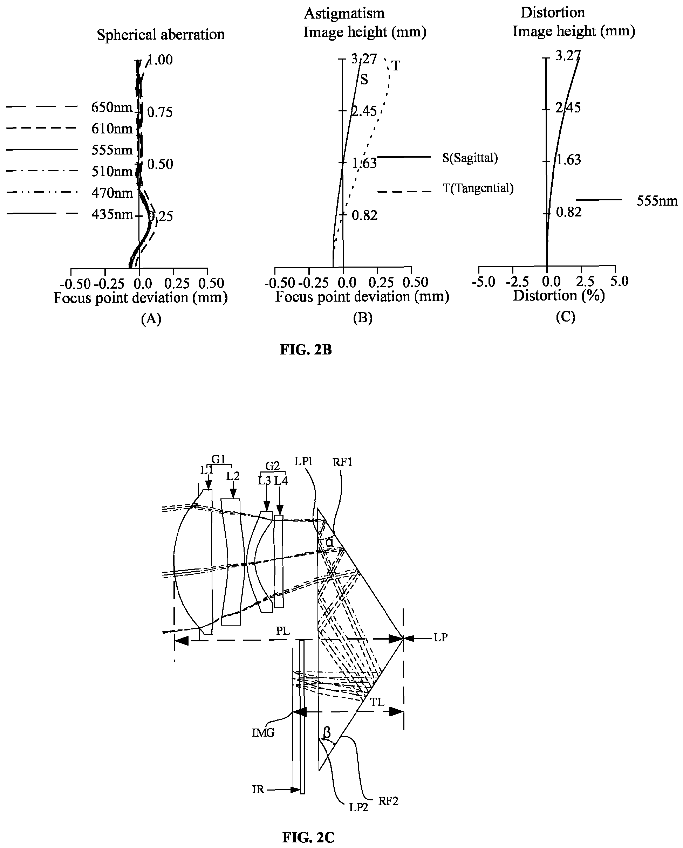

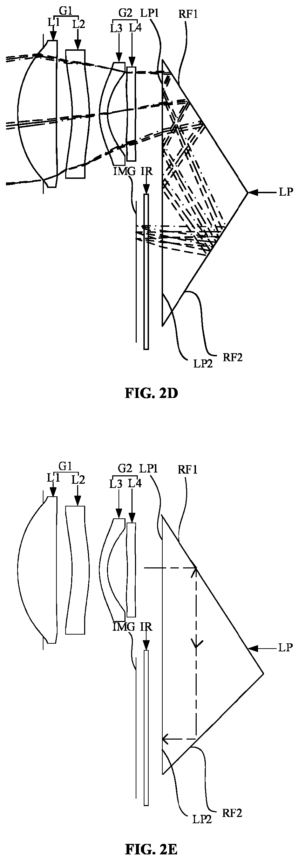

Optionally, as shown in FIGS. 2C and 2D, wherein FIG. 2C illustrates an optical path of the optical system 100 in the telephoto state, and FIG. 2D illustrates an optical path of the optical system 100 in the short focal state. The short focal state refers to the state when the object distance of the optical system is 300 mm, and the telephoto state refers to the state when the object distance of the optical system is at infinity. As shown in the figures, from the object side to the image side along the optical axis of the optical system 100, the optical system 100 sequentially includes the first lens group G1, the second lens group G2, the reflector LP, and the imaging plane IMG. The reflector LP may be a prism, which has a light incident surface LP1, a first reflection surface RF1, a second reflection surface RF2, and a light exit surface LP2 sequentially along the direction of the optical path. The optical path passes through the light incident surface LP1 to the first reflection surface RF1. The first reflection surface RF1 reflects the optical path to the second reflection surface RF2. The second reflection surface RF2 then reflects the light to the light exit surface LP2, and then passes through the light exit surface LP2 to the imaging plane IMG. Thus, the optical path is bent three times by the reflector LP.

As shown in FIG. 2E, along the optical axis from the object side to the image side, the optical system 100 sequentially includes the first lens group G1, the second lens group G2, the reflector LP, and the imaging plane IMG. The reflector LP may be a prism, which has a light incident surface LP1, a first reflection surface RF1, a second reflection surface RF2, and a light exit surface LP2 sequentially along the direction of the optical path. The optical path passes through the light incident surface LP1 to the first reflection surface RF1. The first reflection surface RF1 reflects the optical path to the second reflection surface RF2. The second reflection surface RF2 reflects the light to the light exit surface LP2, and then passes through the light exit surface LP2 to the imaging plane IMG. Thus, the optical path is bent twice by the reflector LP. FIG. 2E shows a simplified optical path.

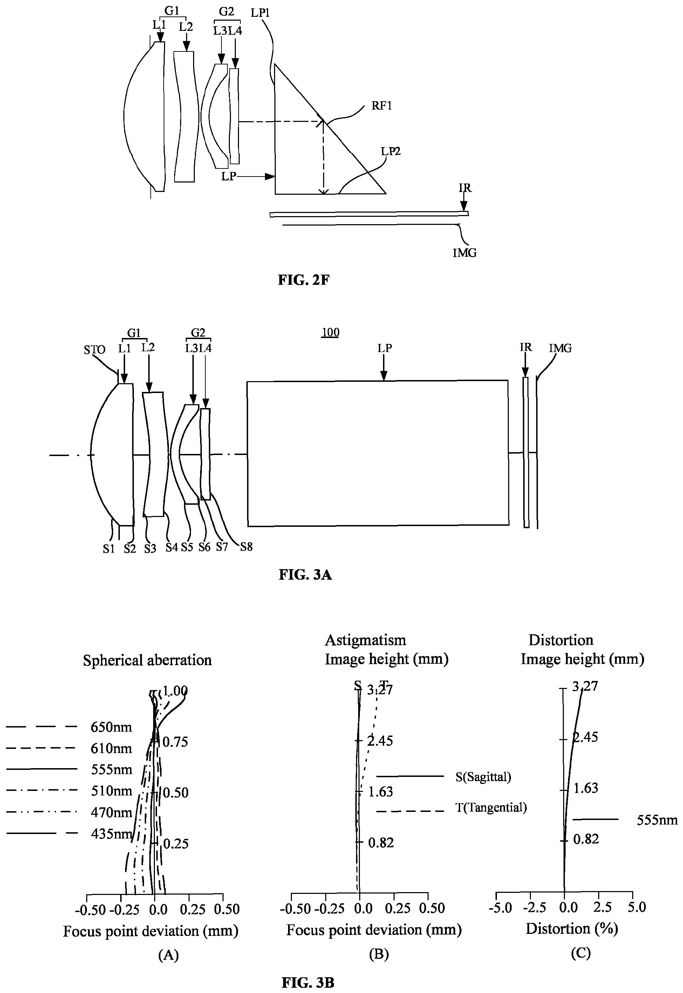

As other examples, when the prism is added into the optical system 100, the optical path may only be bent once as shown in FIG. 2F. Specifically, the optical system 100 sequentially includes the first lens group G1, the second lens group G2, the reflector LP, and the imaging plane IMG. The reflector LP has a light incident surface LP1, a first reflection surface RF1, and a light exit surface LP2 sequentially along the direction of the optical path. The optical path passes through the light incident surface LP1 to the first reflection surface RF1. The first reflection surface RF1 reflects the optical path to the light exit surface LP2, and then passes through the light exit surface LP2 to the imaging plane IMG. Thus, the optical path is bent once by the reflector LP. FIG. 2F shows a simplified optical path.

Referring to FIGS. 2C, 2D, and 2E, taking the reflector LP being a prism as an example, and the prism bents the optical path three times. The prism may include a light incident surface LP1, a first reflection surface RF1, a second reflection surface RF2, and a light exit surface LP2 sequentially connected to each other. The light incident surface LP1 and the first reflection surface RF1 cooperatively define a first angle $\alpha$ (see FIG. 2C), and the second reflection surface RF2 and the light exit surface LP2 cooperatively define a second angle $\beta$ (see FIG. 2D). Each of the first angle $\alpha$ and the second angle $\beta$ may be in a range from 30° to 40°. For example, the above range may further be 30° to 35°, 32° to 40°, or 35° to 40°, etc.

The first angle $\alpha$ and the second angle $\beta$ may be equal to or different from each other.

In some embodiments, the optical system 100 further includes a stop (STO), which may be an aperture stop and/or a field stop. The stop STO may be located between the object side surface S1 of the first lens L1 and the object surface of the optical system 100. In other embodiments, the stop STO may also be located between two lenses. For example, the stop STO is located between the first lens L1 and the second lens L2 The specific location may be adjusted according to actual situation, which is not limited in the embodiments.

In some embodiments, the optical system 100 further includes a filter IR. The filter IR is disposed in the second lens group G2 and located between the reflector RF and the imaging plane IMG of the optical system 100. Optionally, the filter IR may be an infrared cut-off filter that can filter out infrared light, thereby improving the imaging quality and making the imaging to conform to the visual experience of the human eye. The filter IR may be made of a glass with a coating thereon. The filter IR may also be a colored glass or other materials. The specific material may be selected according to actual needs, which is not limited in the embodiments.

In some embodiments, the optical system 100 satisfies the following relationship: 14deg<FOV<30deg. Wherein, FOV is a maximum field of view of the optical system 100. When the optical system 100 satisfies the relationship of 14deg<FOV<30deg, the optical system 100 may have an appropriate angle of view such that the optical system 100 can be applied in telephoto fields. Optionally, the above relationship can further satisfy the following relationship: 19deg<FOV<24deg, thereby reasonably controlling the field of view of optical system 100 and facilitating the imaging of the optical system 100.

In some embodiments, the optical system 100 further satisfies the following relationship: 2<FNO<3.5. Thus, the optical system 100 may have a large aperture. That is, the optical system 100 may balance between illumination and depth of field, and the amount of incoming light may be increased to further improve the imaging quality. Optionally, the optical system 100 may further satisfy the following relationship: 2. 1<FNO<3, thereby enabling the optical system 100 to have a large aperture.

In some embodiments, the optical system 100 further satisfies the following relationship: 0.05 mm<Cz2-Cz1<0.6 mm. Wherein, Cz1 is a distance from the image side surface S4 of the second lens L2 to the object side surface S5 of the third lens L3 at the optical axis when the optical system 100 is in the telephoto state. Cz2 is a distance from the image side surface S4 of the second lens L2 to the object side surface S5 of the third lens L3 at the optical axis when the optical system 100 is in the telephoto state. By moving the second lens group G2, internal focusing imaging may be achieved when correcting the imaging quality performance at different object distances. At the same time, when the optical system 100 satisfies the relationship: 0.05 mm<Cz2-Cz1<0.6 mm, the movement of the second lens group G2 from telephoto to short focus may be effectively controlled. Thus, the moving stroke of the second lens group G2 may be reduced, and the movement driven by the motor may be ensured, thereby reducing the impact on the focusing speed. Optionally, the optical system 100 further satisfies the following relationship: 0.14 mm<Cz2-Cz1<0.41 mm, which may further reduce the moving stroke of the second lens group G2.

In some embodiments, the optical system 100 further satisfies the following relationship: 3<TTL/DLmax<5. Wherein, DLmax is a maximum distance from the object side surface S1 of the first lens L1 to the image side surface S8 of the fourth lens L4 at the optical axis. TTL is a distance from the object side surface S1 of the first lens L1 to the imaging plane IMG of the optical system 100 at the optical axis (i.e., a total length of the optical system 100). When the optical system 100 satisfies the relationship: 3<TTL/DLmax<5, the space of the lenses of the optical system 100 may be reduced based on a miniaturization design of the optical system 100, such that an enough space is remained for the second lens group G2 to realize focusing under different object distances (i.e. telephoto and short focus), thereby enabling the optical system 100 to save costs and achieve flexible layout while achieving internal focusing. Optionally, the optical system 100 may further satisfy the following relationship: 3.2<TTL/DLmax<4.7, such that enough space is remained for the second lens group G2 to realize focusing under different object distances, thereby further facilitating the flexible layout of the first and second lens groups G1, G2 in the optical system 100.

In some embodiments, the optical system 100 further satisfies the following relationship: 1<TTL/fmax<1.4. Wherein, fmax is a maximum focal length of the optical system 100. Thus, better telescope effect may be achieved while realizing a further miniaturization design of the optical system 100. Optionally, the optical system 100 further satisfies the following relationship: 1.1<TTL/fmax<1.3, thereby realizing a better telescope effect.

In some embodiments, the optical system 100 further satisfies the relationship: 4.2<TTL/ImgH<8. Wherein, ImgH is half of an image height corresponding to the maximum field of view of the optical system 100. By limiting the ratio of the total length of optical system 100 to half of the image height corresponding to the maximum field of view of optical system 100, a miniaturization design of the optical system 100 may be achieved, and the imaging quality of the optical system 100 may be improved. In addition, the optical system 100 may have characteristics close to telephoto characteristics, and also have sufficient space for structure layout. Optionally, the optical system 100 further satisfies the relationship: 5.2<TTL/ImgH<7, such that the optical system 100 may have characteristics closer to telephoto characteristics, and also have sufficient space for structure layout.

In some embodiments, the optical system 100 further satisfies the relationship: 4<fmax/ImgH<6. By limiting the ratio of the maximum focal length of the optical system 100 to half of the image height corresponding to the maximum field of view of the optical system 100, the ratio of the height of the optical system 100 to the size the imaging plane IMG of the optical system 100 may be kept within a small range, thereby achieving miniaturization of the optical system 100 through reasonable structural layout.

In some embodiments, the optical system 100 further satisfies the following relationship: 0.25<f1/fmax<0.7. Wherein, f1 is a focal length of the first lens L1, and fmax isa maximum focal length of the optical system 100. By controlling the ratio of the focal length of the first lens L1 to the maximum focal length of the optical system 100, the first lens L1 may have a reasonable refractive power, which may reduce the overall spherical aberration, chromatic aberration, and distortion of the first lens group G1 to a reasonable range, reduce the design difficulty of the subsequent lenses, improve the overall resolution of the optical system 100, and enhance the correction of peripheral aberration of the optical system 100. In addition, the size of the first lens group G1 may be compressed, thereby obtaining the optical system 100 with a smaller volume. Optionally, the optical system 100 further satisfies the following relationship: 0.34<f1/fmax<0.6, which may further compress the size of the first lens group G1 and facilitate the miniaturization design of the optical system 100.

In some embodiments, the optical system 100 further satisfies the following relationship: 1.6<|f2/fmax|<30. Wherein, f2 is a focal length of the second lens L2. By controlling the ratio of the focal length of the second lens L2 to the maximum focal length of the optical system 100, the second lens L2 may have a reasonable refractive power, which may reduce the comprehensive spherical aberration, chromatic aberration, and distortion of the first lens group G1 to a reasonable range, reduce the design difficulty of the subsequent lenses, improve the overall resolution of the optical system 100, and enhance the correction of peripheral aberration of the optical system 100. In addition, the size of the first lens group G1 may be compressed, thereby obtaining the optical system 100 with a small volume.

In some embodiments, the optical system 100 further satisfies the following relationship: -1.7<f3/fmax<-0.4. Wherein, f3 is the focal length of the third lens L3 By controlling the ratio of the focal length of the third lens L3 to the maximum focal length of the optical system 100, the third lens L3 may have a reasonable refractive power, which may reduce the comprehensive spherical aberration, chromatic aberration, and distortion of the first lens group G1 to a reasonable range, reduce the design difficulty of the subsequent lenses, improve the overall resolution of the optical system 100, and enhance the correction of peripheral aberration of the optical system 100. In addition, the size of the first lens group G1 may be compressed, thereby obtaining the optical system 100 with a small volume. Optionally, the optical system 100 further satisfies the following relationship: -1.6<f3/fmax<-0.5, which may achieving miniaturization design and improve the imaging quality of the optical system 100.

In some embodiments, the optical system 100 further satisfies the following relationship: -4<f4/fmax<-0.9. Wherein, f4 is a focal length of the fourth lens L4. By controlling the ratio of the focal length of the fourth lens L4 to the maximum focal length of the optical system 100, the fourth lens L4 may have a reasonable refractive power, which may reduce the comprehensive spherical aberration, chromatic aberration, and distortion of the second lens group G1 to a reasonable range, reduce the design difficulty of the subsequent lenses, improve the overall resolution of the optical system 100, and enhance the correction of peripheral aberration of the optical system 100. In addition, the size of the second lens group G2 may be compressed, thereby obtaining the optical system 100 with a small volume. Optionally, the optical system 100 further satisfies the following relationship: -3.6<f4/fmax<-1.0, which may achieve miniaturization design and improve the imaging quality of the optical system 100.

In some embodiments, the optical system 100 further satisfies the following relationship: 0.25<f12/fmax<0.7. Wherein, f12 is a combined focal length of the first lens L1 and the second lens L2. When the optical system 100 satisfies the relationship: 0.25<f12/fmax<0.7, refractive power of the first lens group G1 may be reasonably configured, thereby avoiding large spherical aberration in the first lens group G1 and then improving the overall resolution of the optical system 100. At the same time, a distance between the first lens group G1 and the second lens group G2 may be compressed, thereby achieving internal focusing by a small stroke. Optionally, the optical system 100 further satisfies the following relationship: 0.34<f12/fmax<0.6, thereby reasonably allocating the refractive power of the first lens group G1 and improving the imaging quality of the optical system 100.

In some embodiments, the optical system 100 further satisfies the following relationship: -0.8<f34/fmax<-0.35. Wherein, f34 is a combined focal length of the third lens L3 and the fourth lens L4. When the optical system 100 satisfies the relationship: -0.8<f34/fmax<-0.35, an absolute value of the refractive power of the second lens group G2 is small, which may compress the moving stroke of the second lens group G2, thereby facilitating the continuous change from the telephoto to the short focus by moving the second lens group G2. Optionally, the optical system 100 further satisfies the following relationship: -0.9<f34/fmax<-0.4, thereby further compressing the moving stroke of the second lens group G2 and achieving continuous internal focusing.

In some embodiments, the optical system 100 further satisfies the following relationship: -1.4<f34/f12<-0.9. When the optical system 100 satisfies the relationship: -1.4<f34/f12<-0.9, the refractive power of the first lens group G1 and second lens group G2 may be reasonably configured, thereby avoiding large spherical aberration generated by the first lens group G1 and improving the overall resolution of the optical system 100. At the same time, the distance between the first lens group G1 and second lens group G2 may be compressed at different object distances, thereby realizing internal focusing by a small stroke. In addition, the refractive power of the first lens group G1 is greater than that of the second lens group G2, which may enhance the light receiving ability of the optical system 100 and compress the moving stroke of the second lens group G2, thereby achieving the miniaturization design of the optical system 100. Optionally, the optical system 100 further satisfies the following relationship: -1.2<f34/f12<-1.0, thereby further compressing the moving stroke of the second lens group G2 and achieving continuous internal focusing.

In some embodiments, the optical system 100 further satisfies the following relationship: 2.9<fmax/R11<3.8. Wherein, R11 is a radius of curvature of the object side surface S1 of the first lens L1 at the optical axis. When the optical system 100 satisfies the relationship: 2.9<fmax/R11<3.8, the complexity of the surface shape of the first lens L1 may be reduced, thereby effectively suppressing the increase of field curvature and distortion, and reducing the difficulty for manufacturing the first lens L1. Optionally, the optical system 100 further satisfies the following relationship: 3.0<fmax/R11<3.5, thereby further facilitating the manufacture of the first lens L1.

In some embodiments, the optical system 100 further satisfies the following relationship: 0.6<| R12/fmax |<14. Wherein, R12 is a radius of curvature of the image side surface S2 of the first lens L1 at the optical axis. When the optical system 100 satisfies the relationship: 0.6<| R12/fmax |<14, the complexity of the surface shape of the first lens L1 may be reduced, thereby effectively suppressing the increase of field curvature and distortion and reducing the difficulty for manufacturing the first lens L1.

In some embodiments, the optical system 100 further satisfies the following relationship: 0.3<| R21/fmax |<20. Wherein, R21 is a radius of curvature of the object side surface S3 of the second lens L2 at the optical axis. When the optical system 100 satisfies the relationship, the complexity of the surface shape of the second lens L2 may be reduced, thereby effectively suppressing the increase of field curvature and distortion and reducing the difficulty for manufacturing the second lens L2.

In some embodiments, the optical system 100 further satisfies the following relationship: 0.3<| R22/fmax |<6. Wherein, R22 is a radius of curvature of the image side surface S4 of the second lens L2 at the optical axis. When the optical system 100 satisfies the relationship, the complexity of the surface shape of the second lens L2 may be reduced, thereby effectively suppressing the increase of field curvature and distortion and reducing the difficulty for manufacturing the second lens L2.

In some embodiments, the optical system 100 further satisfies the following relationship: 0.9<fmax/R31. Wherein, R31 is a radius of curvature of the object side surface S1 of the third lens L3 at the optical axis. When the optical system 100 satisfies the relationship, the complexity of the surface shape of the third lens L3 may be reduced, thereby effectively suppressing the increase of field curvature and distortion and reducing the difficulty for manufacturing the third lens L3. Optionally, the optical system 100 further satisfies the following relationship: 1<fmax/R31<7, thereby facilitating the manufacture of the third lens L3.

In some embodiments, the optical system 100 further satisfies the following relationship: 3<fmax/R32. Wherein, R32 is a radius of curvature of the image side surface S6 of the third lens L3 at the optical axis. When the optical system 100 satisfies the relationship, the complexity of the surface shape of the third lens L3 may be reduced, thereby effectively suppressing the increase of field curvature and distortion and reducing the difficulty for manufacturing the third lens L3. Optionally, the optical system 100 further satisfies the following relationship: 4<fmax/R32<9, thereby facilitating the manufacture of the third lens L3.

In some embodiments, the optical system 100 further satisfies the following relationship: 0<| fmax/R41 |<4. Wherein, R41 is a radius of curvature of the object side surface S7 of the fourth lens L4 at the optical axis. When the optical system 100 satisfies the relationship, the complexity of the surface shape of the fourth lens L4 may be reduced, thereby effectively suppressing the increase of field curvature and distortion and reducing the difficulty for manufacturing the fourth lens L4.

In some embodiments, the optical system 100 further satisfies the following relationship: 0.3<| fmax/R42 |<5. Wherein, R42 is a radius of curvature of the image side surface S8 of the fourth lens L4 at the optical axis. When the optical system 100 satisfies the relationship, the complexity of the surface shape of the fourth lens L4 may be reduced, thereby effectively suppressing the increase of field curvature and distortion and reducing the difficulty for manufacturing the fourth lens L4.

In some embodiments, the optical system 100 further satisfies the following relationship: 2.1<| R11/R12 |<40. By limiting the ratio of the radius of curvature of the object side surface S1 and the radius of curvature of the image side surface S2 of the first lens L1 near the optical axis, the surface curvature of the first lens L1 may be reasonably controlled, thereby facilitating the processing of the first lens L1 and improving the processing yield of the optical system 100.

In some embodiments, the optical system 100 further satisfies the following relationship: 0.6<R21/R22<5. By limiting the ratio of the radius of curvature of the object side surface S3 and the radius of curvature of the image side surface S4 of the second lens L2 near the optical axis, the surface curvature of the second lens L2 may be reasonably controlled, thereby facilitating the processing of the second lens L2 and improving the processing yield of the optical system 100. Optionally, the optical system 100 further satisfies the following relationship: 1.0<R21/R22<4, thereby facilitating the manufacture of the second lens L2

In some embodiments, the optical system 100 further satisfies the following relationship: 1.05<R31/R32<4. By limiting the ratio of the radius of curvature of the object side surface S5 of the third lens L3 and the radius of curvature of the image side surface S6 of the third lens L3 near the optical axis, the surface curvature of the third lens L3 may be reasonably controlled, thereby facilitating the processing of the third lens L3 and improving the processing yield of the optical system 100. Optionally, the optical system 100 further satisfies the following relationship: 1.15<R31/R32<3.5, which may effectively control the surface shape of the third lens L3 and reduce the processing difficulty of the third lens L3.

In some embodiments, the optical system 100 satisfies the following relationship: 0.45<| R41/R42 |<6.5. By limiting the ratio of the radius of curvature of the object side surface S7 and the radius of curvature of the image side surface S8 of the fourth lens L4 near the optical axis, the surface curvature of the fourth lens L4 may be reasonably controlled, thereby facilitating the processing of the fourth lens L4 and improving the processing yield of the optical system 100.

In some embodiments, the optical system 100 further satisfies the following relationship: 1<SD22/SD31<1.3. Wherein, SD22 is a maximum effective half-aperture of the image side surface S4 of the second lens L2, and SD31 is a maximum effective half-aperture of the object side surface S5 of the third lens L3. When the optical system 100 satisfies the relationship: 1<SD22/SD31<1.3, the maximum effective half-aperture of the image side surface S4 of the second lens L2 is greater than the maximum effective half-aperture of the object side surface S5 of the third lens L3. On the one hand, the difference between the maximum effective half-apertures of the image side surface S4 of the second lens L2 and the object side surface S5 of the third lens L3 is small, thereby controlling the segment difference between the two lenses such that the light may smoothly transit between the second lens L2 and the third lens L3. On the other hand, the moving stroke of the second lens group G2 may be reduced, and the spherical aberration and coma aberration introduced by the first lens group G1 may also be reduced, which may improve the imaging quality of the optical system 100. Optionally, the optical system 100 further satisfies the following relationship: 1.1<SD22/SD31<1.25, thereby further reducing the segment difference between the second lens L2 and the third lens L3 and causing the transition of the light to be smoother.

In some embodiments, the optical system 100 further satisfies the following relationship: 1.2<SD11/SD42<2. Wherein, SD11 is a maximum effective half-aperture of the object side surface S1 of the first lens L 1, and SD42 is a maximum effective half-aperture of the image side surface S8 of the fourth lens L4. When the optical system 100 satisfies the relationship: 1.2<SD11/SD42<2, that is, the maximum effective half-aperture of the object side surface S1 of the first lens L1 is greater than the maximum effective half-aperture of the image side surface S8 of the fourth lens L4, the surface shape and the maximum effective half-aperture of the first lens L1 and the fourth lens L4 may be reasonably controlled, and the spherical aberration and coma aberration introduced by the first lens group G1 may also be reduced, which improves the imaging quality of the optical system 100. In addition, the maximum effective half-aperture of the fourth lens L4 may also be reduced, such that when the optical system 100 includes the reflector LP located between the image side surface

S8 of the fourth lens L4 and the imaging plane IMG of the optical system 100, the relationship of 12<SD 11/SD42<2 may also reduce the size of the reflector LP. Optionally, the optical system 100 further satisfies the following relationship: as 1.4<SD11/SD42<1.8, thereby further reducing the aperture of the fourth lens L4 and the size of the reflector LP.

In some embodiments, the optical system 100 further satisfies the following relationship: 0.8<SD11/ImgH<1.2. Wherein, SD11 is a maximum effective half-aperture of the object side surface S1 of the first lens L 1. When the optical system 100 satisfies the relationship, the ratio of the head aperture of the optical system 100 to the size of imaging plane IMG may be reasonably controlled, thereby achieving light convergence within the field of view. Also, the maximum effective half-aperture of the object side surface S1 of the first lens L1 may match the size of the imaging plane IMG of the optical system 100, which improves the space utilization of the optical system 100. Optionally, the optical system 100 further satisfies the following relationship: 0.9<SD11/ImgH<1.1, such that the aperture of the object side surface S1 of the first lens L1 is closer to the size of the imaging plane IMG, which improves the space utilization of the optical system 100.

In some embodiments, the optical system 100 further satisfies the following relationship: 1<CT1/(|SAGYS11|+| SAGYS12|)<2. Wherein, CT1 is a thickness of the first lens L1 at the optical axis, SAGYS11 is a distance along the optical axis from the maximum effective half-aperture of the object side surface S1 of the first lens L1 to an intersection between the object side surface S1 of the first lens L1 and the optical axis (the vector height of the object side surface S1 of the first lens L1), and SAGYS12 is a distance along the optical axis from the maximum effective half-aperture of the image side surface S2 of the first lens L1 to an intersection between the image side surface S2 of the first lens L1 and the optical axis (i.e., the sagittal height of the image side surface S2 of the first lens L1). When the optical system satisfies the relationship, the surface shape of the first lens L1 may be controlled, making the surface shape of the first lens L1 more controllable, thereby facilitating the processing of the first lens L1. At the same time, the thickness of the first lens L1 may also be controlled, thereby achieving the miniaturization design of the optical system 100. Optionally, the optical system 100 further satisfies the following relationship: 1.3<CT1/(|SAGYS11|+|SAGYS12|)<1.8, such that the surface shape of the first lens L1 is more controllable, which is further conducive to the processing of the first lens L1.

In some embodiments, the optical system 100 further satisfies the following relationship: 0.3<CT4/(|SAGYS41|+| SAGYS42|). Wherein, CT4 is a thickness of the fourth lens L4 at the optical axis, SAGYS41 is a distance along the optical axis from the maximum effective half-aperture of the object side surface S7 of the fourth lens L4 to an intersection between the object side surface S7 of the fourth lens L4 and the optical axis (that is, the sagittal height of the object side surface S7 of the fourth lens L4), and SAGYS42 is a distance along the optical axis from the maximum effective half-aperture of the image side surface S8 of the fourth lens L4 to an intersection between the image side surface S8 of the fourth lens L4 and the optical axis (i.e., the sagittal height of the image side surface S8 of the fourth lens L4). When the optical system satisfies the relationship, the surface shape of the fourth lens L4 may be controlled, making the surface shape of the fourth lens L4 more controllable, thereby facilitating the processing of the fourth lens L4. At the same time, the thickness of the fourth lens L4 may also be controlled, thereby achieving the miniaturization design of the optical system 100. Optionally, the optical system 100 further satisfies the following relationship: 0.35<CT4/(|SAGYS41|+|SAGYS42|)<12, such that the surface shape of the fourth lens L4 is more controllable, which is further conducive to the processing of the fourth lens L4.

In some embodiments, the optical system 100 further satisfies the following relationship: 1.1<ΣCT/CT12<1.7. Wherein, CT12 is a sum of the thicknesses of the first lens L1 and the second lens L2 at the optical axis (i.e. the overall thickness of the first lens group G1), and ΣCT is a sum of the thicknesses of the first lens L1, the second lens L2, the third lens L3, and the fourth lens L4 at the optical axis. By limiting the ratio of the overall thickness of the first lens group G1 to the overall thickness of the first and second lens groups G1, G2, the overall thickness of the first lens group G1 may be reasonably controlled, such that the difference between the overall thicknesses of the first and second lens groups G1 and G2 is small. Thus, miniaturization of the optical system 100 may be achieved, and at the same time, the processing and assembly of the first and second lens groups G1, G2 are facilitated. Optionally, the optical system 100 further satisfies the following relationship: 1.2<ΣCT/CT12<1.5, which may better control the overall thickness of the first lens group G1 and facilitate the miniaturization design of the optical system 100.

In some embodiments, the optical system 100 further satisfies the following relationship: 3<ΣCT/CT34<5.5. Wherein, CT34 is a sum of the thicknesses of the third lens L3 and the fourth lens L4 at the optical axis (i.e., the overall thickness of the second lens group G2). Thus, the overall thickness of the second lens group G2 is smaller, and the overall volume of the second lens group G2 is also smaller, making it easier for the motor to drive the second lens group G2 to move along the optical axis. Thus, the miniaturization of the optical system 100 may be achieved, and at the same time, the processing and assembly of the first and second lens groups G1, G2 are facilitated. Optionally, the optical system 100 further satisfies the following relationship: **3.3<ΣCT/CT34<4.9, which** may better control the overall thickness of the second lens group G2 and facilitate the miniaturization design of the optical system 100.

In some embodiments, the optical system 100 further satisfies the following relationship: 2<CT12/CT34<4.5. Wherein, CT12 is the sum of the thicknesses of the first lens L1 and the second lens L2 at the optical axis (i.e., the overall thickness of the first lens group G1), and CT34 is the sum of the thicknesses of the third lens L3 and the fourth lens L4 at the optical axis (i.e., the overall thickness of the second lens group G2). Thus, the overall thickness of the first and second lens groups G1, 2 may be reasonably controlled, such that the overall thickness of the second lens group G2 may be smaller, thereby controlling the overall volume of the second lens group G2 to control the overall volume of the optical system 100. Therefore, the miniaturization of the optical system 100 may be achieved, and at the same time, the processing and assembly of the first and second lens groups G1, G2 are facilitated. Optionally, the optical system 100 further satisfies the following relationship: 2.3<CT12/CT34<3.9, thereby further reducing the thickness of the second lens group G2. Thus, the power and volume of the driving mechanism, which drives the second lens group G2 to move, may further be reduced.

In some embodiments, the optical system 100 further satisfies the following relationship: 1.8<CT1/CT2<8. Wherein, CT2 is the thickness of the second lens L2 at the optical axis. By limiting the ratio of the thickness of the first lens L1 at the optical axis to the thickness of the second lens L2 at the optical axis, the thickness of the first lens L1 and the second lens L2 may be reasonably controlled, thereby achieving a miniaturized design of the optical system 100 and reducing the sensitivity of the optical system 100. Optionally, the optical system 100 further satisfies the following relationship: 2<CT1/CT2<6.1, thereby further increasing the thickness of the first lens L1 and reducing the sensitivity of the optical system 100.

In some embodiments, the optical system 100 further satisfies the following relationship: 0.7<CT4/CT3<1.8. Wherein, CT3 is the thickness of the third lens L3 at the optical axis, and CT4 is the thickness of the fourth lens L4 at the optical axis. When the optical system 100 satisfies the relationship, the thickness of the fourth lens L4 and the third lens L3 may be effectively controlled, thereby controlling the overall thickness of the second lens group G2 and achieve the miniaturization design of the optical system 100. Also, the sensitivity of the optical system 100 may be reduced. Optionally, the optical system 100 further satisfies the following relationship: 0.85<CT4/CT3<1.65, such that the thickness of the fourth lens L4 is close to the thickness of the third lens L3, thereby controlling the thickness of the second lens group G2 and further reducing the sensitivity of the optical system 100.

In some embodiments, the optical system 100 further satisfies the following relationship: 0.8<CT1/(CT2+CT3+CT4)<2.3. When the optical system 100 satisfies the relationship, the thickness ratio of the first lens L1 in the entire optical system 100 may be effectively controlled, thereby achieving miniaturization of the optical system 100 and reducing the sensitivity of the optical system 100. Optionally, the optical system 100 further satisfies the following relationship: 0.95<CT1/(CT2+CT3+CT4)<2.1, such that the thickness of the first lens L1 is substantially equal to the sum of the thicknesses of the second lens L2, the third lens L3, and the fourth lens L4. Thus, the overall thickness of the lenses is largely contributed by the first lens L1, and the sensitivity of the optical system 100 is further reduced.

In some embodiments, the optical system 100 further satisfies the following relationship: 0.9<CT2/AT12<40. When the optical system 100 satisfies the relationship, the ratio of the thickness of the second lens L2 to the spacing between the second lens L2 and the first lens L1 may be effectively controlled, thereby reasonably controlling the thickness and the air gap of the first lens group G1, and achieving the miniaturization design of the optical system 100. Also, the sensitivity of the optical system 100 may be reduced. Optionally, the optical system 100 further satisfies the following relationship: 1<CT2/AT12<20, such that the distance between the first lens L1 and the second lens L2 at the optical axis is smaller, which is more conducive to the assembly of the two lenses and reduces the sensitivity of the optical system 100.

In some embodiments, the optical system 100 further satisfies the following relationship: 0.25<CT3/AT34<7. When the optical system 100 satisfies the relationship, the ratio of the thickness of the third lens to the spacing between the third lens L3 and the fourth lens L4 may be reasonably controlled, thereby reasonably controlling the thickness and the air gap of the second lens group G2 and achieving the miniaturization design of the optical system 100. Also, the sensitivity of the optical system 100 may be reduced. Optionally, the optical system 100 further satisfies the following relationship: 0.32<CT3/AT34<5, such that the distance between the third lens L3 and the fourth lens L4 at the optical axis is smaller, which is more conducive to the assembly of the two lenses and reduces the sensitivity of the optical system 100.

In some embodiments, the optical system 100 further satisfies the following relationship: 0.1<AT23max/(AT12+AT34)<6.5. Wherein, AT23max is a maximum distance from the image side surface S4 of the second lens L2 to the object side surface S5 of the third lens L3 at the optical axis. Thus, the maximum distance between the image side surface S4 of the second lens L2 and the object side S5 of the third lens L3 at the optical axis may be reasonably controlled, such that the second lens group G2 may have a sufficient movement distance when switching between the near focus and the telephoto states. Optionally, the optical system 100 further satisfies the following relationship: 0.2<AT23max/(AT12+AT34)<6.2, such that the second lens L2 and the third lens L3 have sufficient distance therebetween at the optical axis, thereby allowing the second lens group G2 to have sufficient movement distance.

In some embodiments, the optical system 100 further satisfies the following relationship: 1.1<P/(TTL-P)<2. Wherein, P is a length of the reflector LP at the optical axis (i.e., P is the thickness of the reflector LP at the optical axis). When the optical system 100 satisfies the relationship, the thickness of the reflector LP may be reasonably controlled, such that the optical system 100 may achieve miniaturization design, and at the same time, the reflector LP may have a sufficient thickness, thereby extending the optical path. Optionally, the optical system 100 further satisfies the following relationship: 1.3<P/(TTL-P)<1.7, such that the reflector LP has a sufficient thickness, which is more conducive to the extension of the optical path.

In some embodiments, as shown in FIG. 2C, the optical system 100 further satisfies the following relationship: 10 mm<PL<18 mm. Wherein, PL is a distance at the optical axis from a point of the optical system 100 closest to the object side to another point of the optical system 100 closest to the image side. When the optical system 100 satisfies the relationship, the size of each lens may be compressed as much as possible to make the length of the reflector LP larger, which is beneficial for extending the optical path. Optionally, the optical system 100 satisfies the relationship: 10 mm<PL<15 mm, which may further compress the size of each lens to allow the overall thickness of the optical system 100 to be smaller. When the optical system 100 is applied to an electronic device, the optical system 100 may match the lightweight electronic device. That is, the optical system 100 can be applied in a lightweight electronic device.

The optical system 100 of the embodiments will be described with detail parameters.

First embodiment

The optical system 100 according to the first embodiment of the present disclosure is shown in FIGS. 1A and 2A. The optical system 100 includes a stop STO, a first lens L1, a second lens L2, a third lens L3, a fourth lens L4, a reflector LP, and a filter IR sequentially arranged along the optical axis from the object side to the image side. The first lens L1 and the second lens L2 constitute a first lens group. The third lens L3 and the fourth lens L4 constitute a second lens group.

In this embodiment, the first lens L1 has positive refractive power. The object side surface S1 and the image side surface S2 of the first lens L1 are both convex near the optical axis. The second lens L2 has negative refractive power. The object side surface S3 of the second lens L2 is concave near the optical axis, and the image side surface S4 of the second lens L2 is convex near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 of the fourth lens L4 is concave near the optical axis, and the image side surface S8 is convex near the optical axis.

Optionally, as shown in FIGS. 2C and 2D, the first angle $\alpha$ formed between the first reflection surface RF1 and the light incident surface LP1 of the reflector LP, and the second angle $\beta$ formed between the second reflection surface RF2 and the light emitting surface LP2 are both in a range from 31° to 35°. Thus, the size of the reflector LP at the optical axis is further compressed, thereby bending the light multiple times and enabling the miniaturization design of the optical system 100. In this embodiment, each of the first angle $\alpha$ and the second angle $\beta$ is 33 degrees.

As shown in FIG. 2C, PL is the distance at the optical axis from the point of the optical system 100 closest to the object side to the point of the optical system 100 closest to the image side. Wherein, 10 mm<PL<18 mm. In other words, the optical system 100 of the present disclosure can adapt to a lightweight electronic device. In this embodiment, PL=11.82mm。

As shown in FIG. 2C, optionally, taking the optical system 100 being applied in an electronic device as an example, TL is the distance at the optical axis from the point of the optical system 100 closest to the object side to the imaging plane IMG of the optical system 100. Wherein, 3 mm<TL<7 mm. When the relationship is satisfied, the size of the section of the optical system 100 from the reflector LP to the imaging plane IMG is reduced, thereby making the optical system 100 more suitable for a lightweight electronic device. In this embodiment, TL=5.88 mm。

Taking the electronic device being a mobile phone as an example, when a camera module including the optical system is assembled to the mobile phone and serves as a rear camera module, the optical axis of the lens group (first lens L1 to fourth lens L4) is substantially perpendicular to the rear surface of the mobile phone (i.e. the surface of the back cover). The aperture of the lens is not limited by the thickness of the mobile phone, and may completely or partially protrude from the rear surface of the mobile phone to avoid excessive thickness of the entire mobile phone. In addition, the imaging plane IMG of the optical system 100 is substantially parallel to a display surface of the mobile phone, which facilitates the installation of a photosensitive chip and reduce the assembly difficulty.

In addition, in the prism of the present disclosure, the light incident surface LP1 and the light exit surface LP2 are located on a same side of the prism and substantially parallel to the rear surface of the mobile phone. The mobile phone is lighter in weight and ergonomic in design.

The optical system 100 may also be used in a front camera or installed by other methods. The application in the rear camera is only an example.

Specifically, the parameters of the optical system 100 are shown in Table 1. The components of the optical system 100 arranged along the optical axis from the object side to the image side are shown in order from top to bottom in Table 1. For a same lens, the surface with a smaller surface numeral is the object side surface of the lens, and the surface with a larger surface numeral is the image side surface of the lens. For example, the surface numerals 1 and 2 correspond to the object side surface S1 and the image side surface S2 of the first lens L1, respectively. The Y radius in Table 1 is the radius of curvature of the object side surface or the image side surface of the corresponding surface numeral at the optical axis. In the parameter column "thickness", a first value is the thickness of the lens at the optical axis, and the second value is the distance from the image side surface of the lens to the next surface at the optical axis. The value of the stop STO in the parameter column "thickness" is the distance from the stop STO to a vertex of the next surface (the vertex refers to an intersection between the surface and the optical axis) at the optical axis. The direction from the object side surface of the first lens L1 to the image side surface of the last lens is assumed to be a positive direction of the optical axis. When the value of the thickness of the stop STO is negative, the stop STO is indicated to be located at the image side of the vertex of the next surface. When the value of the thickness of the stop STO is positive, the stop STO is indicated to be located at the object side of the vertex of the next surface. The units of Y radius, thickness, and focal length in Table 1 are all in millimeters. The refractive index and Abbe number in Table 1 were obtained at a reference wavelength of 587.56 nm. The focal length was obtained at a reference wavelength of 555 nm. The optical system 100 of the present disclosure can achieve internal focusing and has telephoto and short focal states. Thus, the optical system 100 has different object distances A in the telephoto and short focal states, respectively. At the same time, when the optical system 100 is in the telephoto and short focal states, the air gap T23 (i.e., denoted as C in Table 1) between the image side surface S4 of the second lens L2 and the object side surface S5 of the third lens L3 at the optical axis is different. When the second lens group switches between the short focal state and the telephoto state, the distance (i.e., denoted as B in Table 1) between the image side surface S8 of the fourth lens L4 and the reflector is also different.

Thus, Table 2 provides the values of A, B, C, f, TTL, FNO, and FOV in the telephoto and short focal states. In Table 2, the unit of FOV is deg, FNO has no unit, and all other parameters are in millimeters.

In addition, the surface numerals 1 and 2 in Tables 1 and 3 correspond to the object side surface S1 and the image side surface S2 of the first lens L1, respectively. The surface numerals 3 and 4 correspond to the object side surface S3 and the image side surface S4 of the second lens L2, respectively. The surface numbers 7 and 8 correspond to the object side surface S7 and the image side surface S8 of the fourth lens L4, respectively.

In the first embodiment, the object side surface and the image side surface of any of the first to fourth lenses L1 to L4 are aspherical. The surface shape x of the aspherical surface in the embodiment may be expressed but not limited to the following aspherical formula:

$$x = \frac{ch^2}{1 + \sqrt{1 - (K+1)c^2h^2}} + \sum Aih^i$$

Wherein, x is a vector height along the optical axis from a point of the aspherical surface having a height h to the vertex of the aspherical surface, c is a curvature of the aspherical surface at the optical axis, c=1/Y (i.e., the paraxial curvature c is the reciprocal of the radius of curvature Y in Table 1), K is a cone constant, and Ai is a correction coefficient of the aspherical surface corresponding to the $i^{th}$ high-order term. Table 3 shows the high-order coefficients A4, A6, A8, A10, A12, A14, A16, A18, and A20 that applied for the surface numbers 1 to 8 in the first embodiment.

Table 1

| First embodiment | | | | | | | | |
|---|---|---|---|---|---|---|---|---|
| Surface numeral | Surface name | Surface type | Y radius | Thickness | Material | Refractive index | Abbe number | Focal length |
| OBJ | Object side | Sphere | Infinity | A | | | | |
| STO | Stop | Sphere | Infinity | -1.120 | | | | |
| 1 | First lens | Asphere | 5.451 | 2.051 | Plastic | 1.546 | 55.93 | 7.199 |
| 2 | | Asphere | -12.228 | 0.491 | | | | |
| 3 | Second lens | Asphere | -6.090 | 0.521 | Plastic | 1.677 | 19.24 | -27.994 |
| 4 | | Asphere | -9.285 | C | | | | |
| 5 | Third lens | Asphere | 2.555 | 0.419 | Plastic | 1.592 | 28.39 | -24.678 |
| 6 | | Asphere | 2.042 | 1.147 | | | | |
| 7 | Fourth lens | Asphere | -5.951 | 0.4 | Plastic | 1.570 | 37.4 | -24.367 |
| 8 | | Asphere | -10.668 | B | | | | |
| 9 | Reflector | Sphere | Infinity | 12 | Glass | 1.750 | 51.01 | |
| 10 | | Sphere | Infinity | 0.7 | | | | |
| 11 | Filter | Sphere | Infinity | 0.21 | Glass | 1.518 | 64.17 | |
| 12 | | Sphere | Infinity | 0.39 | | | | |
| IMG | Imaging plane | Sphere | Infinity | 0 | | | | |

Table 2

| Variable distance | A | B | C | f | FOV | TTL | FNO |
|---|---|---|---|---|---|---|---|
| Telephoto state | Infinity | 1.67 | 0.30 | 16.66 | 21.3 | 20.3 | 2.53 |
| Short focal state | 300 | 1.30 | 0.67 | 15.83 | 20.7 | 20.3 | 2.4 |

Table 3

| First embodiment Asphere coefficient | | | | |
|---|---|---|---|---|
| Surface numeral | K | A4 | A6 | A8 | A10 |
| 1 | -1.03009E-01 | -1.97526E-04 | 1.31230E-04 | -3.28822E-05 | 7.83721E-06 |
| 2 | 0.00000E+00 | 2.95263E-03 | -1.07420E-03 | 3.80502E-04 | -7.03341E-05 |
| 3 | -2.41254E+00 | 2.29007E-02 | -1.70171E-02 | 7.70954E-03 | -2.23052E-03 |
| 4 | -5.15053E+00 | 2.22565E-02 | -2.11755E-02 | 1.15413E-02 | -3.96028E-03 |
| 5 | -1.29621E+00 | -1.58214E-02 | -2.22332E-02 | 3.33052E-02 | -1.98279E-02 |
| 6 | -4.26689E-01 | -3.48316E-02 | -3.62000E-02 | 7.16994E-02 | -5.54267E-02 |
| 7 | -2.64546E+00 | -4.62866E-03 | -6.99794E-03 | 3.92750E-02 | -4.29540E-02 |
| 8 | -7.16104E-01 | 4.85704E-03 | -8.95048E-03 | 3.49162E-02 | -3.82187E-02 |
| Surface numeral | A12 | A14 | A16 | A18 | A20 |
| 1 | -1.09634E-06 | 8.47841E-08 | -2.68965E-09 | 0.00000E+00 | 0.00000E+00 |
| 2 | 7.80581E-06 | -4.79150E-07 | 1.19773E-08 | 0.00000E+00 | 0.00000E+00 |
| 3 | 4.32509E-04 | -5.55748E-05 | 4.51530E-06 | -2.09407E-07 | 4.21654E-09 |
| 4 | 8.94056E-04 | -1.31526E-04 | 1.20853E-05 | -6.28143E-07 | 1.40781E-08 |
| 5 | 6.72845E-03 | -1.38715E-03 | 1.70214E-04 | -1.13503E-05 | 3.14671E-07 |
| 6 | 2.48964E-02 | -6.99526E-03 | 1.22127E-03 | -1.22852E-04 | 5.48122E-06 |
| 7 | 2.51373E-02 | -8.86412E-03 | 1.88860E-03 | -2.24740E-04 | 1.14632E-05 |
| 8 | 2.26906E-02 | -8.12093E-03 | 1.75206E-03 | -2.10683E-04 | 1.08829E-05 |

Referring to (A) of FIGS. 1B and 2B, which show the longitudinal spherical aberration of the optical system 100 of the first embodiment in the telephoto state and short focal state, respectively. The reference wavelengths are at wavelengths of 435 nm, 470 nm, 510 nm, 555 nm, 610nm, and 650 nm. In (A) of FIGS. 1B and 2B, the horizontal coordinate along the X-axis represents the deviation of the focus point, and the vertical coordinate along the Y-axis represents the normalized field of view. From (A) of FIGS. 1B and 2B, the spherical aberration data of the optical system 100 in the first embodiment is good, indicating that the imaging quality of the optical system 100 in the embodiment is good.

Referring to (B) of FIGS. 1B and 2B, which show the light astigmatism of the optical system 100 of the first embodiment at a wavelength of 555 nm. The horizontal coordinate along the X-axis represents the deviation of the focus point, and the vertical coordinate along the Y-axis represents the image heigh in millimeters. The T curve of the astigmatism diagram represents the curvature of the imaging plane IMG in the tangential direction. The S curve of the astigmatism diagram represents the curvature of the imaging plane IMG in the sagittal direction. As shown in (B) of FIGS. 1B and 2B, the astigmatism of the optical system 100 has been compensated at this wavelength.

Referring to (C) of FIGS. 1B and 2B, which show the distortion of the optical system 100 of the first embodiment at a wavelength of 555 nm. The horizontal coordinate along the X-axis represents the distortion, and the vertical coordinate along the Y-axis represents the image height in millimeters. As shown in (C) of FIGS. 1B and 2B, the distortion of the optical system 100 has been well corrected at this wavelength.

Second embodiment

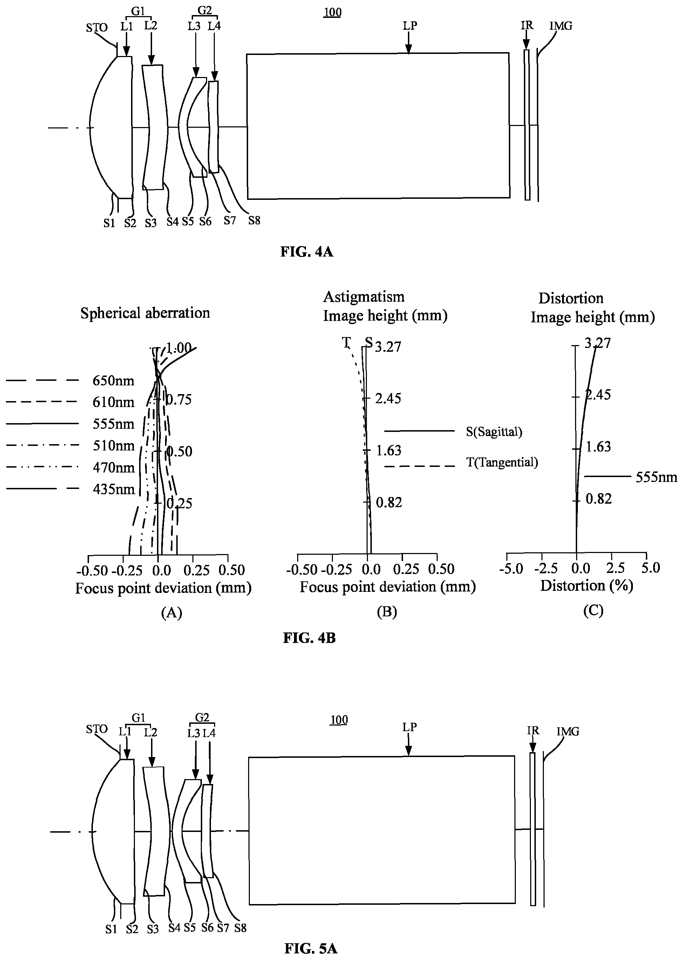

As shown in FIGS. 3A and 4A, the optical system 100 of the present disclosure includes a stop STO, a first lens L1, a second lens L2, a third lens L3, a fourth lens L4, a reflector, and a filter IR sequentially arranged along the optical axis from the object side to the image side. The first lens L1 and the second lens L2 constitute the first lens group, and the third lens L3

and the fourth lens L4 constitute the second lens group.

In this embodiment, the first lens L1 has positive refractive power. The object side surface S1 of the first lens L1 is convex near the optical axis, and the image side surface S2 of the first lens L1 is concave near the optical axis. The second lens L2 has positive refractive power. The object side surface S3 of the second lens L2 is concave near the optical axis, and the image side surface S4 of the second lens L2 is convex near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 of the fourth lens L4 is concave near the optical axis, and the image side surface S8 of the fourth lens L4 is convex near the optical axis.

Specifically, the parameters of the optical system 100 are shown in Table 4. The definitions of each parameter may refer to the description of the previous embodiment, which will not be repeated. Correspondingly, Table 5 provides the values of various parameters of the optical system 100 in the telephoto state and short focal state, respectively. Table 6 shows the high-order coefficients that applied for each aspherical lens in the second embodiment.

Table 4

| Surface numeral | Surface name | Surface type | Y radius | Thickness | Material | Refractive index | Abbe number | Focal length |
|---|---|---|---|---|---|---|---|---|
| OBJ | Object side | Sphere | Infinity | A | | | | |
| STO | Stop | Sphere | Infinity | -1.270 | | | | |
| 1 | First lens | Asphere | 4.952 | 1.921 | Plastic | 1.546 | 55.93 | 9.302 |
| 2 | | Asphere | 170.100 | 0.794 | | | | |
| 3 | Second lens | Asphere | -7.477 | 0.850 | Plastic | 1.677 | 19.24 | 117.894 |
| 4 | | Asphere | -7.151 | C | | | | |
| 5 | Third lens | Asphere | 2.679 | 0.400 | Plastic | 1.592 | 28.39 | -18.867 |
| 6 | | Asphere | 2.041 | 1.007 | | | | |
| 7 | Fourth lens | Asphere | -10.127 | 0.400 | Plastic | 1.570 | 37.4 | -36.594 |
| 8 | | Asphere | -19.967 | B | | | | |
| 9 | Reflector | Sphere | Infinity | 12 | Glass | 1.750 | 51.01 | |
| 10 | | Sphere | Infinity | 0.7 | | | | |
| 11 | Filter | Sphere | Infinity | 0.21 | Glass | 1.518 | 64.17 | |
| 12 | | Sphere | Infinity | 0.39 | | | | |
| IMG | Imaging plane | Sphere | Infinity | 0 | | | | |

Table 5

| Variable distance | A | B | C | f | FOV | TTL | FNO |
|---|---|---|---|---|---|---|---|
| Telephoto state | Infinity | 1.73 | 0.10 | 16.6 | 22 | 20.5 | 2.53 |
| Short focal state | 300 | 1.33 | 0.50 | 15.7 | 21.3 | 20.5 | 2.4 |

Table 6

| Surface numeral | K | A4 | A6 | A8 | A10 |
|---|---|---|---|---|---|
| | | Second embodiment Asphere coefficient | | | |
| 1 | -7.18914E-02 | -2.20172E-04 | 1.38100E-04 | -3.19967E-05 | 7.87345E-06 |
| 2 | -9.90000E+01 | -3.42302E-03 | 1.74528E-03 | -4.18269E-04 | 6.79519E-05 |

(continued)

| Second embodiment Asphere coefficient | | | | | |
|---|---|---|---|---|---|
| Surface numeral | K | A4 | A6 | A8 | A10 |
| 3 | -1.29510E+00 | -3.06756E-04 | 4.38033E-03 | -2.22804E-03 | 6.86105E-04 |
| 4 | -8.00088E+00 | 4.82722E-03 | -7.69215E-04 | 3.98540E-04 | -2.07315E-04 |
| 5 | -1.52869E+00 | -1.34711E-02 | -9.43050E-03 | 1.14173E-02 | -4.95046E-03 |
| 6 | -4.28095E-01 | -3.57501E-02 | -6.19449E-03 | 1.50346E-02 | -6.63505E-03 |
| 7 | -6.17983E+00 | -1.67832E-03 | 8.32277E-03 | 1.60352E-04 | -1.05437E-03 |
| 8 | 3.00779E+01 | 9.78163E-04 | 8.45623E-03 | -3.76839E-03 | 2.19946E-03 |
| Surface numeral | A12 | A14 | A16 | A18 | A20 |
| 1 | -1.09901E-06 | 8.40084E-08 | -2.80106E-09 | 0.00000E+00 | 0.00000E+00 |
| 2 | -6.85109E-06 | 3.58786E-07 | -7.49108E-09 | 0.00000E+00 | 0.00000E+00 |
| 3 | -1.36418E-04 | 1.75371E-05 | -1.41680E-06 | 6.58360E-08 | -1.34670E-09 |
| 4 | 7.16756E-05 | -1.48670E-05 | 1.79836E-06 | -1.16740E-07 | 3.14652E-09 |
| 5 | 1.10286E-03 | -1.19023E-04 | 6.49055E-07 | 1.12520E-06 | -7.68602E-08 |
| 6 | 8.37178E-04 | 2.91290E-04 | -1.36681E-04 | 2.16341E-05 | -1.26901E-06 |
| 7 | 1.59116E-04 | 7.02644E-05 | -2.57657E-05 | 2.33005E-06 | -1.75746E-08 |
| 8 | -1.58368E-03 | 7.06566E-04 | -1.73746E-04 | 2.17776E-05 | -1.08229E-06 |

Referring to FIGS. 3B and 4B, from the (A) of the longitudinal spherical aberration diagram, (B) of the light astigmatism diagram, and (C) of the distortion diagram, the longitudinal spherical aberration, the astigmatism, and the distortion of the optical system 100 have been well controlled, thus the optical system 100 of this embodiment has good imaging quality. In addition, the wavelengths corresponding to the diagram in each of (A), (B) and (C) inFIGS. 3B and 4B may refer to the description in the first embodiment regarding (A), (B) and (C) in FIGS. 1B and 1B.

Third Embodiment

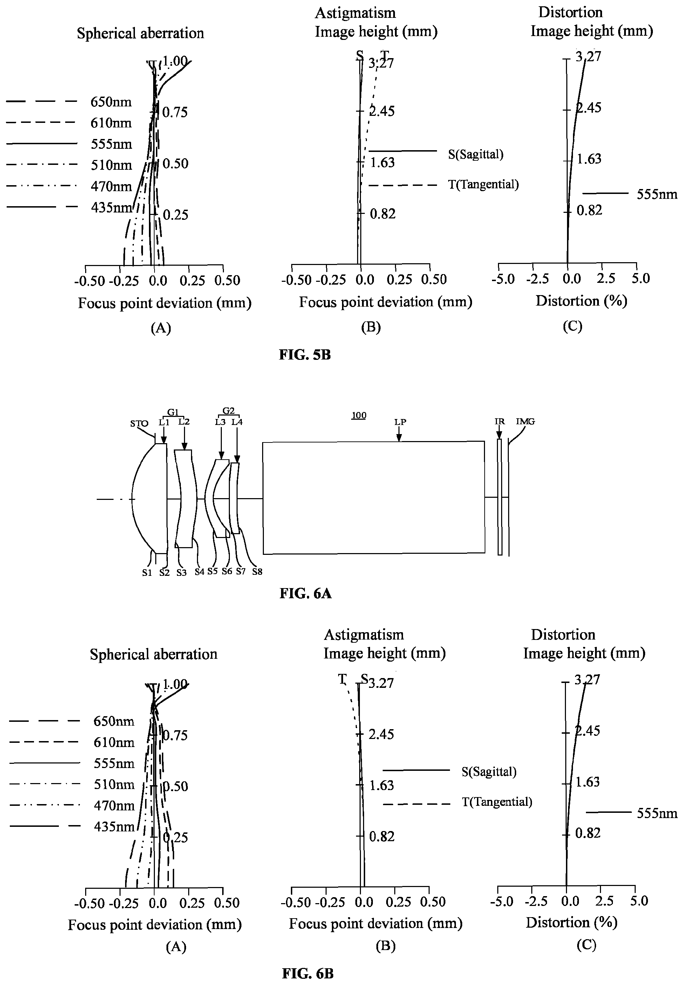

As shown in FIGS. 5A and 6A, the optical system 100 of the present disclosure includes a stop STO, a first lens L1, a second lens L2, a third lens L3, a fourth lens L4, a reflector, and a filter IR sequentially arranged along the optical axis from the object side to the image side. The first lens L1 and the second lens L2 constitute the first lens group, and the third lens L3 and the fourth lens L4 constitute the second lens group.

In this embodiment, the first lens L1 has positive refractive power. The object side surface S1 of the first lens L1 is convex near the optical axis, and the image side surface S2 of the first lens L1 is concave near the optical axis. The second lens L2 has positive refractive power. The object side surface S3 of the second lens L2 is concave near the optical axis, and the image side surface S4 of the second lens L2 is convex near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 and the image side surface S8 of the fourth lens L4 are both concave near the optical axis.

Specifically, the parameters of the optical system 100 are shown in Table 7. The definitions of each parameter may refer to the description of the previous embodiments, which will not be repeated. Correspondingly, Table 8 provides the values of various parameters of the optical system 100 in the telephoto state and short focal state, respectively. Table 9 shows the high-order coefficients that applied for each aspherical lens in the third embodiment.

Table 7

| Third embodiment | | | | | | | | |
|---|---|---|---|---|---|---|---|---|
| Surface numeral | Surface name | Surface type | Y radius | Thickness | Material | Refractive index | Abbe number | Focal length |
| OBJ | Object side | Sphere | Infinity | A | | | | |

(continued)

| Surface numeral | Surface name | Surface type | Y radius | Thickness | Material | Refractive index | Abbe number | Focal length |
|---|---|---|---|---|---|---|---|---|
| STO | Stop | Sphere | Infinity | -1.277 | | | | |
| 1 | First lens | Asphere | 4.869 | 1.907 | Plastic | 1.546 | 55.93 | 9.141 |
| 2 | | Asphere | 170.100 | 0.758 | | | | |
| 3 | Second lens | Asphere | -7.487 | 0.850 | Plastic | 1.677 | 19.24 | 73.919 |
| 4 | | Asphere | -6.811 | C | | | | |
| 5 | Third lens | Asphere | 2.896 | 0.443 | Plastic | 1.592 | 28.39 | -15.125 |
| 6 | | Asphere | 2.063 | 0.877 | | | | |
| 7 | Fourth lens | Asphere | -53.433 | 0.4 | Plastic | 1.570 | 37.4 | -43.079 |
| 8 | | Asphere | 45.542 | B | | | | |
| 9 | Reflector | Sphere | Infinity | 12 | Glass | 1.750 | 51.01 | |
| 10 | | Sphere | Infinity | 0.7 | | | | |
| 11 | Filter | Sphere | Infinity | 0.21 | Glass | 1.518 | 64.17 | |
| 12 | | Sphere | Infinity | 0.39 | | | | |
| IMG | Imaging plane | Sphere | Infinity | 0 | | | | |

Table 8

| Variable distance | A | B | C | f | FOV | TTL | FNO |
|---|---|---|---|---|---|---|---|
| Telephoto state | Infinity | 1.60 | 0.10 | 16.6 | 22.03 | 20.38 | 2.53 |
| Short focal state | 300 | 1.40 | 0.45 | 15.68 | 21.3 | 20.38 | 2.4 |

Table 9

| Third embodiment Asphere coefficient | | | | |
|---|---|---|---|---|
| Surface numeral | K | A4 | A6 | A8 | A10 |
|---|---|---|---|---|---|
| 1 | -1.21644E-01 | -6.17232E-04 | 1.53946E-04 | -3.04358E-05 | 7.94452E-06 |
| 2 | -9.90000E+01 | -7.57206E-03 | 3.14148E-03 | -7.55953E-04 | 1.29903E-04 |
| 3 | -6.51174E-01 | -8.94143E-03 | 9.63702E-03 | -4.18892E-03 | 1.17794E-03 |
| 4 | -6.19843E+00 | -4.87181E-04 | 3.67330E-03 | -1.69863E-03 | 4.05200E-04 |
| 5 | -1.64704E+00 | -1.21230E-02 | -1.02763E-02 | 1.21494E-02 | -6.23754E-03 |
| 6 | -4.30761E-01 | -3.09305E-02 | -1.01696E-02 | 1.97534E-02 | -1.14771E-02 |
| 7 | 5.35969E+01 | 8.35413E-04 | 7.24059E-03 | -3.02451E-04 | -5.71586E-04 |
| 8 | -9.90000E+01 | 1.84134E-03 | 4.22625E-03 | 2.69607E-03 | -5.40445E-03 |
| Surface numeral | A12 | A14 | A16 | A18 | A20 |
| 1 | -1.09876E-06 | 8.36452E-08 | -2.85299E-09 | 0.00000E+00 | 0.00000E+00 |
| 2 | -1.37316E-05 | 7.55645E-07 | -1.66246E-08 | 0.00000E+00 | 0.00000E+00 |
| 3 | -2.16055E-04 | 2.55070E-05 | -1.87593E-06 | 7.87035E-08 | -1.44542E-09 |
| 4 | -3.75078E-05 | -3.68782E-06 | 1.25193E-06 | -1.14402E-07 | 3.70780E-09 |
| 5 | 1.98178E-03 | -4.23416E-04 | 5.90559E-05 | -4.78037E-06 | 1.67960E-07 |

(continued)

| Surface numeral | A12 | A14 | A16 | A18 | A20 |
|---|---|---|---|---|---|
| 6 | 3.76786E-03 | -7.48826E-04 | 7.13200E-05 | 6.59480E-07 | -4.75618E-07 |
| 7 | -2.53420E-04 | 3.57461E-04 | -1.41725E-04 | 2.50673E-05 | -1.69333E-06 |
| 8 | 3.56367E-03 | -1.31434E-03 | 2.80647E-04 | -3.23061E-05 | 1.55307E-06 |

Referring to FIGS. 5B and 6B, from the (A) of the longitudinal spherical aberration diagram, (B) of the light astigmatism diagram, and (C) of the distortion diagram, the longitudinal spherical aberration, the astigmatism, and the distortion of the optical system 100 have been well controlled, thus the optical system 100 of this embodiment has good imaging quality. In addition, the wavelengths corresponding to the diagram in each of (A), (B) and (C) in FIGS. 5B and 6B may refer to the description in the first embodiment regarding (A), (B) and (C) in FIGS. 1B and 1B.

Fourth Embodiment

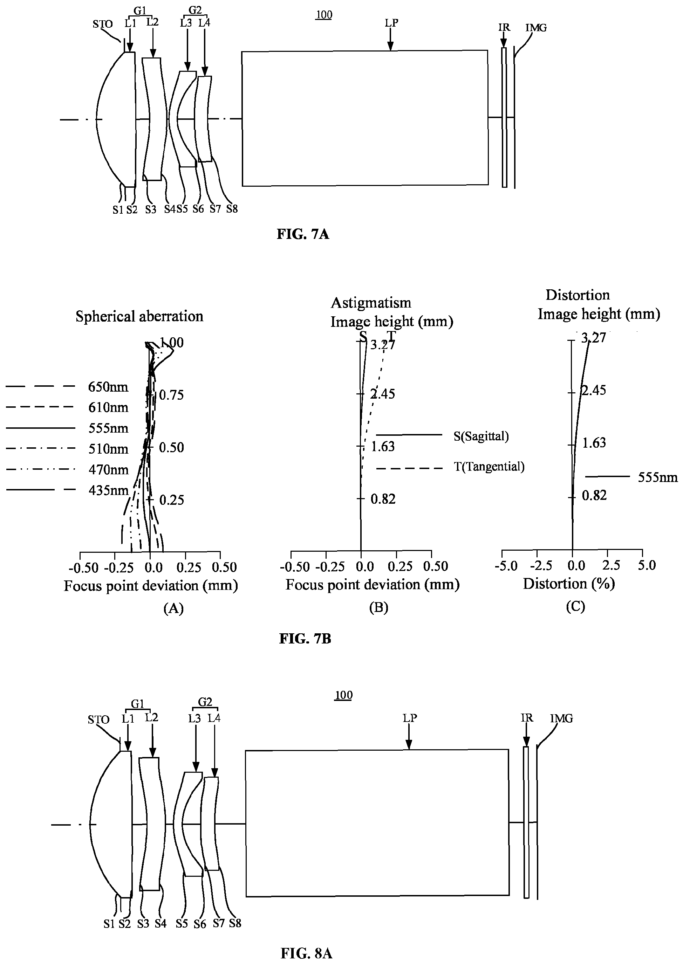

As shown in FIGS. 7A and 8A, the optical system 100 of the present disclosure includes a stop STO, a first lens L1, a second lens L2, a third lens L3, a fourth lens L4, a reflector, and a filter IR sequentially arranged along the optical axis from the object side to the image side. The first lens L1 and the second lens L2 constitute the first lens group, and the third lens L3 and the fourth lens L4 constitute the second lens group.

In this embodiment, the first lens L1 has positive refractive power. The object side surface S1 of the first lens L1 is convex near the optical axis, and the image side surface S2 of the first lens L1 is concave near the optical axis. The second lens L2 has positive refractive power. The object side surface S3 of the second lens L2 is concave near the optical axis, and the image side surface S4 of the second lens L2 is convex near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 of the fourth lens L4 is convex near the optical axis, and the image side surface S8 of the fourth lens L4 is concave near the optical axis.

Specifically, the parameters of the optical system 100 are shown in Table 10. The definitions of each parameter may refer to the description of the previous embodiments, which will not be repeated. Correspondingly, Table 11 provides the values of various parameters of the optical system 100 in the telephoto state and short focal state, respectively. Table 12 shows the high-order coefficients that applied for each aspherical lens in the fourth embodiment.

Table 10

| Fourth embodiment | | | | | | | | |
|---|---|---|---|---|---|---|---|---|
| Surface numeral | Surface name | Surface type | Y radius | Thickness | Material | Refractive index | Abbe number | Focal length |
| OBJ | Object side | Sphere | Infinity | A | | | | |
| STO | Stop | Sphere | Infinity | -1.378 | | | | |
| 1 | First lens | Asphere | 4.603 | 1.912 | Plastic | 1.546 | 55.93 | 8.652 |
| 2 | | Asphere | 152.081 | 0.683 | | | | |
| 3 | Second lens | Asphere | -7.652 | 0.850 | Plastic | 1.677 | 19.24 | 40.703 |
| 4 | | Asphere | -6.257 | C | | | | |
| 5 | Third lens | Asphere | 3.177 | 0.400 | Plastic | 1.592 | 28.39 | -11.190 |
| 6 | | Asphere | 2.046 | 0.844 | | | | |
| 7 | Fourth lens | Asphere | 19.452 | 0.635 | Plastic | 1.570 | 37.4 | -42.408 |
| 8 | | Asphere | 10.65 | B | | | | |
| 9 | Reflector | Sphere | Infinity | 12 | Glass | 1.750 | 51.01 | |
| 10 | | Sphere | Infinity | 0.7 | | | | |

(continued)

| Fourth embodiment | | | | | | | | |
|---|---|---|---|---|---|---|---|---|
| Surface numeral | Surface name | Surface type | Y radius | Thickness | Material | Refractive index | Abbe number | Focal length |
| 11 | Filter | Sphere | Infinity | 0.21 | Glass | 1.518 | 64.17 | |
| 12 | | Sphere | Infinity | 0.39 | | | | |
| IMG | Imaging plane | Sphere | Infinity | 0 | | | | |

Table 11

| Variable distance | A | B | C | f | FOV | TTL | FNO |
|---|---|---|---|---|---|---|---|
| Telephoto state | Infinity | 1.68 | 0.10 | 17 | 21.5 | 20.4 | 2.53 |
| Short focal state | 300 | 1.42 | 0.36 | 15.97 | 20.9 | 20.4 | 2.39 |

Table 12

| Fourth embodiment Asphere coefficient | | | | | |
|---|---|---|---|---|---|
| Surface numeral | K | A4 | A6 | A8 | A10 |
| 1 | -2.19193E-01 | -9.77334E-04 | 1.49951E-04 | -3.07911E-05 | 7.93196E-06 |
| 2 | -9.90000E+01 | -1.24895E-02 | 5.24019E-03 | -1.21932E-03 | 1.84816E-04 |
| 3 | -6.11235E-01 | -1.73312E-02 | 1.69246E-02 | -7.00269E-03 | 1.81362E-03 |
| 4 | -6.73561E+00 | -2.92410E-03 | 7.46531E-03 | -3.75540E-03 | 1.08108E-03 |
| 5 | -1.78457E+00 | -1.41525E-02 | -9.35973E-03 | 9.74668E-03 | -3.55175E-03 |
| 6 | -4.11789E-01 | -3.36899E-02 | -2.68358E-03 | 9.48303E-03 | -9.90145E-04 |
| 7 | -4.47099E+01 | -2.56398E-04 | 1.16733E-02 | -5.26732E-03 | 1.87953E-03 |
| 8 | -8.81218E+01 | 6.36544E-03 | 5.19234E-03 | -3.39229E-03 | 5.45685E-04 |
| Surface numeral | A12 | A14 | A16 | A18 | A20 |
| 1 | -1.09759E-06 | 8.39396E-08 | -2.81298E-09 | 0.00000E+00 | 0.00000E+00 |
| 2 | -1.71502E-05 | 8.60110E-07 | -1.78275E-08 | 0.00000E+00 | 0.00000E+00 |
| 3 | -3.08612E-04 | 3.43919E-05 | -2.41936E-06 | 9.77530E-08 | -1.73290E-09 |
| 4 | -1.96306E-04 | 2.26878E-05 | -1.60363E-06 | 6.27902E-08 | -1.03227E-09 |
| 5 | 5.17774E-04 | 2.10911E-05 | -1.75005E-05 | 2.20860E-06 | -9.46171E-08 |
| 6 | -2.55526E-03 | 1.42999E-03 | -3.49063E-04 | 4.23329E-05 | -2.09208E-06 |
| 7 | -7.74299E-04 | 2.51838E-04 | -4.99061E-05 | 4.94679E-06 | -1.86657E-07 |
| 8 | 9.83655E-05 | -4.13861E-05 | -4.63157E-07 | 1.37800E-06 | -1.20679E-07 |

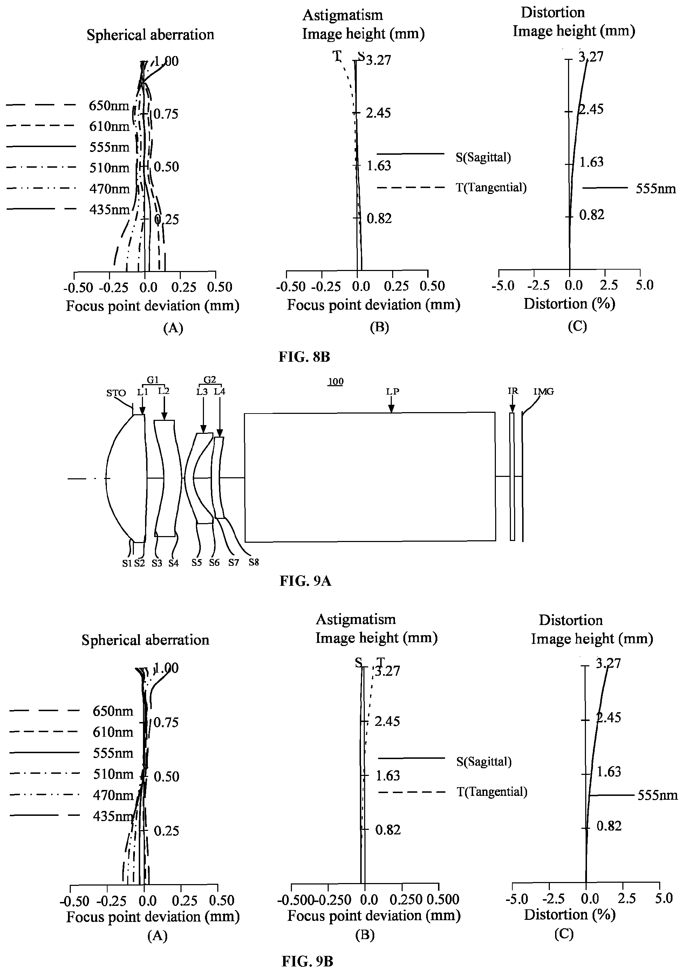

Referring to FIGS. 7B and 8B, from the (A) of the longitudinal spherical aberration diagram, (B) of the light astigmatism diagram, and (C) of the distortion diagram, the longitudinal spherical aberration, the astigmatism, and the distortion of the optical system 100 have been well controlled, thus the optical system 100 of this embodiment has good imaging quality. In addition, the wavelengths corresponding to the diagram in each of (A), (B) and (C) in FIGS. 7B and 8Bmay refer to the description in the first embodiment regarding (A), (B) and (C) in FIGS. 1B and 1B.

Fifth Embodiment

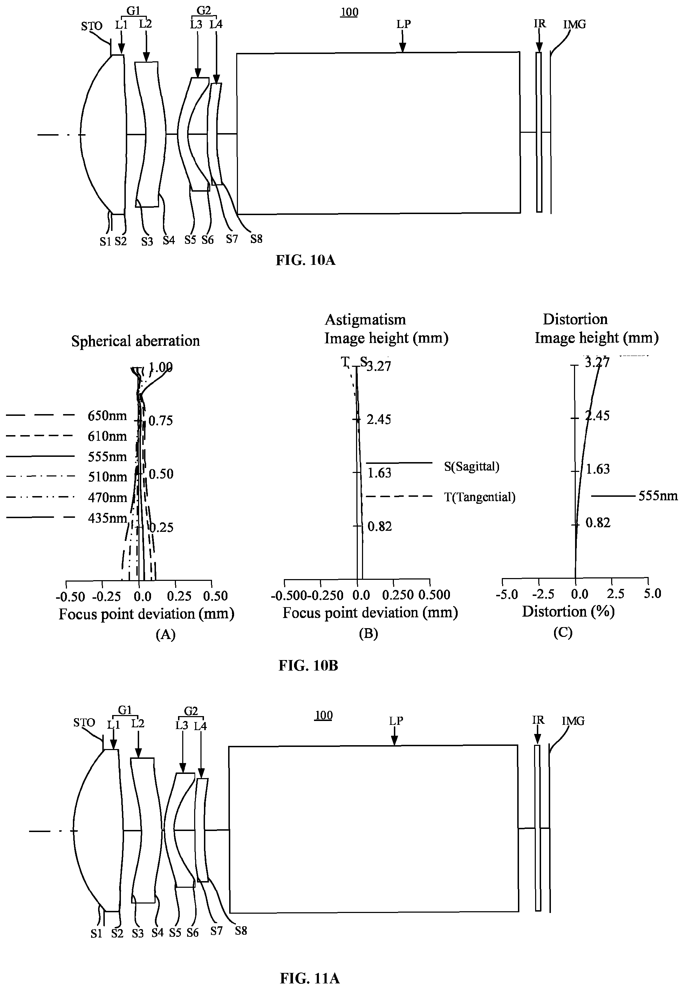

As shown in FIGS. 9A and 10A, the optical system 100 of the present disclosure includes a stop STO, a first lens L1, a second lens L2, a third lens L3, a fourth lens L4, a reflector, and a filter IR sequentially arranged along the optical axis from the object side to the image side. The first lens L 1 and the second lens L2 constitute the first lens group, and the third lens L3 and the fourth lens L4 constitute the second lens group.

In this embodiment, the first lens L1 has positive refractive power. The object side surface S1 and the image side surface S2 of the first lens L1 are both convex near the optical axis. The second lens L2 has positive refractive power. The object side surface S3 of the second lens L2 is concave near the optical axis, and the image side surface S4 of the second lens L2 is convex near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 of the fourth lens L4 is convex near the optical axis, and the image side surface S8 of the fourth lens L4 is concave near the optical axis.

Specifically, the parameters of the optical system 100 are shown in Table 13. The definitions of each parameter may refer to the description of the previous embodiments, which will not be repeated. Correspondingly, Table 14 provides the values of various parameters of the optical system 100 in the telephoto state and short focal state, respectively. Table 15 shows the high-order coefficients that applied for each aspherical lens in the fifth embodiment.

Table 13

| Surface numeral | Surface name | Surface type | Y radius | Thickness | Material | Refractive index | Abbe number | Focal length |
|---|---|---|---|---|---|---|---|---|
| | | | | | Fifth embodiment | | | |
| OBJ | Object side | Sphere | Infinity | A | | | | |
| STO | Stop | Sphere | Infinity | -1.309 | | | | |
| 1 | First lens | Asphere | 5.057 | 1.968 | Plastic | 1.546 | 55.93 | 8.441 |
| 2 | | Asphere | -44.956 | 0.809 | | | | |
| 3 | Second lens | Asphere | -6.366 | 0.850 | Plastic | 1.677 | 19.24 | 359.154 |
| 4 | | Asphere | -6.538 | C | | | | |
| 5 | Third lens | Asphere | 2.936 | 0.429 | Plastic | 1.592 | 28.39 | -14.511 |
| 6 | | Asphere | 2.069 | 0.838 | | | | |
| 7 | Fourth lens | Asphere | 41.991 | 0.4 | Plastic | 1.570 | 37.4 | -54.911 |
| 8 | | Asphere | 17.869 | B | | | | |
| 9 | Reflector | Sphere | Infinity | 12 | Glass | 1.750 | 51.01 | |
| 10 | | Sphere | Infinity | 0.7 | | | | |
| 11 | Filter | Sphere | Infinity | 0.21 | Glass | 1.518 | 64.17 | |
| 12 | | Sphere | Infinity | 0.39 | | | | |
| IMG | Imaging plane | Sphere | Infinity | 0 | | | | |

Table 14

| Variable distance | A | B | C | f | FOV | TTL | FNO |
|---|---|---|---|---|---|---|---|
| Telephoto state | Infinity | 1.20 | 0.15 | 16 | 22.7 | 19.95 | 2.35 |
| Short focal state | 300 | 0.86 | 0.49 | 15.16 | 21.3 | 19.95 | 2.19 |

Table 15

| Surface numeral | K | A4 | A6 | A8 | A10 |
|---|---|---|---|---|---|
| | | Fifth embodiment Asphere coefficient | | | |
| 1 | -1.72725E-01 | -6.89496E-04 | 1.42898E-04 | -3.13447E-05 | 7.90676E-06 |
| 2 | -9.90000E+01 | -6.91503E-03 | 2.65891E-03 | -5.71590E-04 | 8.20753E-05 |

(continued)

| Fifth embodiment Asphere coefficient | | | | |
|---|---|---|---|---|
| Surface numeral | K | A4 | A6 | A8 | A10 |
| 3 | -9.02731E-01 | -9.19631E-03 | 9.48584E-03 | -3.87889E-03 | 1.00075E-03 |
| 4 | -4.77914E+00 | -3.56176E-03 | 6.20396E-03 | -2.99598E-03 | 8.42882E-04 |
| 5 | -1.72138E+00 | -1.63952E-02 | -4.16491E-03 | 6.19752E-03 | -2.49196E-03 |
| 6 | -4.27886E-01 | -3.12012E-02 | -5.66455E-03 | 1.10888E-02 | -3.97018E-03 |
| 7 | 9.90000E+01 | 7.22058E-03 | -2.37900E-03 | 7.22671E-03 | -4.58545E-03 |
| 8 | 2.61233E+01 | 6.37032E-03 | -2.65731E-03 | 6.03362E-03 | -4.51818E-03 |
| Surface numeral | A12 | A14 | A16 | A18 | A20 |
| 1 | -1.09650E-06 | 8.43867E-08 | -2.74052E-09 | 0.00000E+00 | 0.00000E+00 |
| 2 | -6.81128E-06 | 2.82074E-07 | -4.49041E-09 | 0.00000E+00 | 0.00000E+00 |
| 3 | -1.65534E-04 | 1.74662E-05 | -1.13839E-06 | 4.17948E-08 | -6.59087E-10 |
| 4 | -1.41301E-04 | 1.36707E-05 | -6.62976E-07 | 7.58869E-09 | 3.55704E-10 |
| 5 | 4.71764E-04 | -3.82901E-05 | -5.62681E-07 | 3.04888E-07 | -1.48528E-08 |
| 6 | 2.49880E-04 | 1.51354E-04 | -4.00447E-05 | 3.97002E-06 | -1.50948E-07 |
| 7 | 1.54428E-03 | -3.37727E-04 | 4.77631E-05 | -4.03807E-06 | 1.55635E-07 |
| 8 | 1.74677E-03 | -4.07070E-04 | 5.68180E-05 | -4.36736E-06 | 1.45597E-07 |

Referring to FIGS. 9B and 10B, from the (A) of the longitudinal spherical aberration diagram, (B) of the light astigmatism diagram, and (C) of the distortion diagram, the longitudinal spherical aberration, the astigmatism, and the distortion of the optical system 100 have been well controlled, thus the optical system 100 of this embodiment has good imaging quality. In addition, the wavelengths corresponding to the diagram in each of (A), (B) and (C) in FIGS. 9B and 10B may refer to the description in the first embodiment regarding (A), (B) and (C) in FIGS. 1B and 1B.

Sixth Embodiment

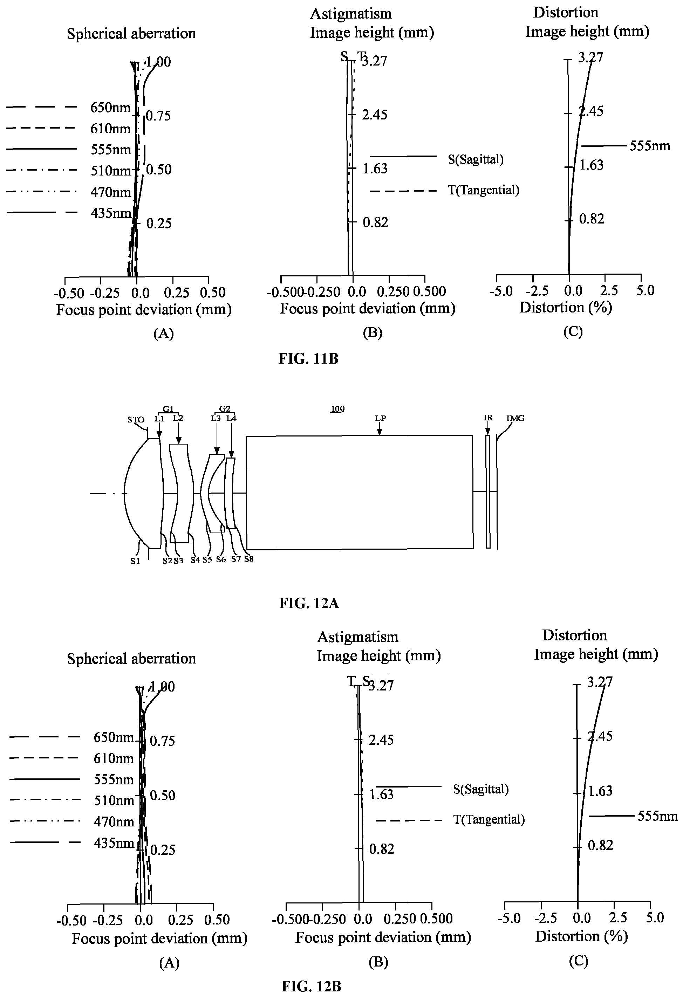

As shown in FIGS. 11A and 12A, the optical system 100 of the present disclosure includes a stop STO, a first lens L1, a second lens L2, a third lens L3, a fourth lens L4, a reflector, and a filter IR sequentially arranged along the optical axis from the object side to the image side. The first lens L1 and the second lens L2 constitute the first lens group, and the third lens L3 and the fourth lens L4 constitute the second lens group.

In this embodiment, the first lens L 1 has positive refractive power. The object side surface S1 and the image side surface S2 of the first lens L1 are both convex near the optical axis. The second lens L2 has negative refractive power. The object side surface S3 of the second lens L2 is concave near the optical axis, and the image side surface S4 of the second lens L2 is convex near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 and the image side surface S8 of the fourth lens L4 are both concave near the optical axis.

Specifically, the parameters of the optical system 100 are shown in Table 16. The definitions of each parameter may refer to the description of the previous embodiments, which will not be repeated. Correspondingly, Table 17 provides the values of various parameters of the optical system 100 in the telephoto state and short focal state, respectively. Table 18 shows the high-order coefficients that applied for each aspherical lens in the sixth embodiment.

Table 16

| Sixth embodiment | | | | | | | | |
|---|---|---|---|---|---|---|---|---|
| Surface numeral | Surface name | Surface type | Y radius | Thickness | Material | Refractive index | Abbe number | Focal length |
| OBJ | Object side | Sphere | Infinity | A | | | | |

(continued)

| Surface numeral | Surface name | Surface type | Y radius | Thickness | Material | Refractive index | Abbe number | Focal length |
|---|---|---|---|---|---|---|---|---|
| | | | | Sixth embodiment | | | | |
| STO | Stop | Sphere | Infinity | -1.262 | | | | |
| 1 | First lens | Asphere | 5.033 | 2.072 | Plastic | 1.546 | 55.93 | 7.473 |
| 2 | | Asphere | -18.438 | 0.751 | | | | |
| 3 | Second lens | Asphere | -6.096 | 0.850 | Plastic | 1.677 | 19.24 | 170.651 |
| 4 | | Asphere | -6.798 | C | | | | |
| 5 | Third lens | Asphere | 3.162 | 0.407 | Plastic | 1.592 | 28.39 | -12.452 |
| 6 | | Asphere | 2.106 | 0.867 | | | | |
| 7 | Fourth lens | Asphere | 197.224 | 0.4 | Plastic | 1.570 | 37.4 | -50.000 |
| 8 | | Asphere | 33.332 | B | | | | |
| 9 | Reflector | Sphere | Infinity | 12 | Glass | 1.750 | 51.01 | |
| 10 | | Sphere | Infinity | 0.7 | | | | |
| 11 | Filter | Sphere | Infinity | 0.21 | Glass | 1.518 | 64.17 | |
| 12 | | Sphere | Infinity | 0.39 | | | | |
| IMG | Imaging plane | Sphere | Infinity | 0 | | | | |

Table 17

| Variable distance | A | B | C | f | FOV | TTL | FNO |
|---|---|---|---|---|---|---|---|
| Telephoto state | Infinity | 1.00 | 0.10 | 16.6 | 22.7 | 19.78 | 2.4 |
| Short focal state | 300 | 0.75 | 0.39 | 15.14 | 22.2 | 19.78 | 2.23 |

Table 18

| Surface numeral | K | A4 | A6 | A8 | A10 |
|---|---|---|---|---|---|
| | | Sixth embodiment Asphere coefficient | | | |
| 1 | -1.29495E-01 | -5.66187E-04 | 1.47589E-04 | -3.16596E-05 | 7.85162E-06 |
| 2 | -9.46745E+01 | -7.15092E-03 | 2.75050E-03 | -5.41515E-04 | 7.14706E-05 |
| 3 | -1.28911E+00 | -9.54064E-03 | 8.65439E-03 | -3.01588E-03 | 6.87551E-04 |
| 4 | -4.68608E+00 | -5.68509E-03 | 6.05627E-03 | -2.25543E-03 | 5.10642E-04 |
| 5 | -1.84356E+00 | -1.93579E-02 | -1.01589E-04 | 4.05588E-03 | -2.24847E-03 |
| 6 | -4.29356E-01 | -3.21348E-02 | 1.10361E-03 | 5.02561E-03 | -2.01963E-03 |
| 7 | -8.80216E+01 | 4.24445E-03 | 3.29389E-03 | -1.99264E-04 | 2.83750E-04 |
| 8 | 7.48533E+01 | 4.22477E-03 | 2.44724E-03 | -1.39173E-03 | 1.08593E-03 |
| Surface numeral | A12 | A14 | A16 | A18 | A20 |
| 1 | -1.10068E-06 | 8.42422E-08 | -2.73215E-09 | 0.00000E+00 | 0.00000E+00 |
| 2 | -5.69563E-06 | 2.31938E-07 | -3.65290E-09 | 0.00000E+00 | 0.00000E+00 |
| 3 | -1.03906E-04 | 1.01725E-05 | -6.15986E-07 | 2.08111E-08 | -2.93897E-10 |
| 4 | -6.44066E-05 | 2.83702E-06 | 2.92206E-07 | -4.17752E-08 | 1.51430E-09 |
| 5 | 6.19457E-04 | -9.95263E-05 | 9.39654E-06 | -4.74048E-07 | 9.37113E-09 |

(continued)

| Surface numeral | A12 | A14 | A16 | A18 | A20 |
|---|---|---|---|---|---|
| 6 | -2.45947E-05 | 1.88041E-04 | -5.15403E-05 | 6.06780E-06 | -2.85584E-07 |
| 7 | -4.59697E-04 | 2.06517E-04 | -4.46436E-05 | 4.80364E-06 | -2.12922E-07 |
| 8 | -7.77386E-04 | 3.07006E-04 | -6.60353E-05 | 7.29142E-06 | -3.21194E-07 |

Referring to FIGS. 11B and 12B, from the (A) of the longitudinal spherical aberration diagram, (B) of the light astigmatism diagram, and (C) of the distortion diagram, the longitudinal spherical aberration, the astigmatism, and the distortion of the optical system 100 have been well controlled, thus the optical system 100 of this embodiment has good imaging quality. In addition, the wavelengths corresponding to the diagram in each of (A), (B) and (C) in FIGS. 11B and 12B may refer to the description in the first embodiment regarding (A), (B) and (C) in FIGS. 1B and 1B.

Seventh embodiment

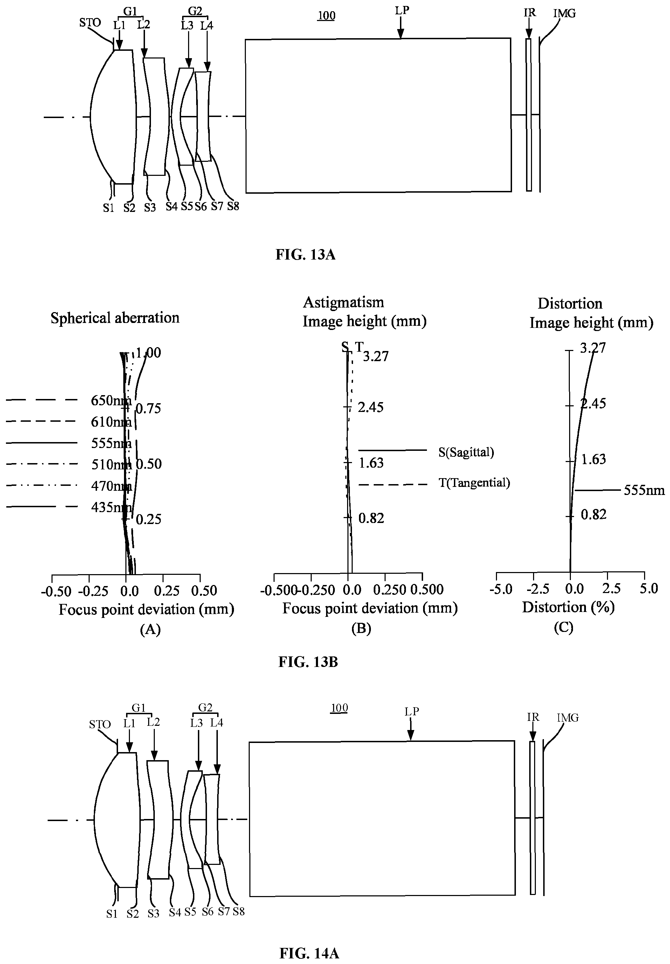

As shown in FIGS. 13A and 14A, the optical system 100 of the present disclosure includes a stop STO, a first lens L1, a second lens L2, a third lens L3, a fourth lens L4, a reflector, and a filter IR sequentially arranged along the optical axis from the object side to the image side. The first lens L1 and the second lens L2 constitute the first lens group, and the third lens L3 and the fourth lens L4 constitute the second lens group.

In this embodiment, the first lens L 1 has positive refractive power. The object side surface S1 and the image side surface S2 of the first lens L1 are both convex near the optical axis. The second lens L2 has negative refractive power. The object side surface S3 of the second lens L2 is concave near the optical axis, and the image side surface S4 of the second lens L2 is convex near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 and the image side surface S8 of the fourth lens L4 are both concave near the optical axis.

Specifically, the parameters of the optical system 100 are shown in Table 19. The definitions of each parameter may refer to the description of the previous embodiments, which will not be repeated. Correspondingly, Table 20 provides the values of various parameters of the optical system 100 in the telephoto state and short focal state, respectively. Table 21 shows the high-order coefficients that applied for each aspherical lens in the seventh embodiment.

Table 19

| Seventh embodiment | | | | | | | | |
|---|---|---|---|---|---|---|---|---|
| Surface numeral | Surface name | Surface type | Y radius | Thickness | Material | Refractive index | Abbe number | Focal length |
| OBJ | Object side | Sphere | Infinity | A | | | | |
| STO | Stop | Sphere | Infinity | -1.078 | | | | |
| 1 | First lens | Asphere | 4.728 | 2.090 | Plastic | 1.546 | 55.93 | 6.968 |
| 2 | | Asphere | -16.441 | 0.633 | | | | |
| 3 | Second lens | Asphere | -6.747 | 0.850 | Plastic | 1.677 | 19.24 | -141.701 |
| 4 | | Asphere | -7.626 | C | | | | |
| 5 | Third lens | Asphere | 4.211 | 0.400 | Plastic | 1.592 | 28.39 | -12.112 |
| 6 | | Asphere | 2.559 | 0.766 | | | | |
| 7 | Fourth lens | Asphere | -22.322 | 0.500 | Plastic | 1.570 | 37.4 | -24.293 |
| 8 | | Asphere | 36.752 | B | | | | |
| 9 | Reflector | Sphere | Infinity | 12 | Glass | 1.750 | 51.01 | |
| 10 | | Sphere | Infinity | 0.7 | | | | |
| 11 | Filter | Sphere | Infinity | 0.21 | Glass | 1.518 | 64.17 | |
| 12 | | Sphere | Infinity | 0.39 | | | | |

(continued)

| Seventh embodiment | | | | | | | | |
|---|---|---|---|---|---|---|---|---|
| Surface numeral | Surface name | Surface type | Y radius | Thickness | Material | Refractive index | Abbe number | Focal length |
| IMG | Imaging plane | Sphere | Infinity | 0 | | | | |

Table 20

| Variable distance | A | B | C | f | FOV | TTL | FNO |
|---|---|---|---|---|---|---|---|
| Telephoto state | Infinity | 1.70 | 0.10 | 17.4 | 21 | 20.34 | 2.9 |
| Short focal state | 300 | 1.46 | 0.34 | 16.3 | 20.67 | 20.34 | 2.67 |

Table 21

| Seventh embodimentAsphere coefficient | | | | | |
|---|---|---|---|---|---|
| Surface numeral | K | A4 | A6 | A8 | A10 |
| 1 | -3.64335E-02 | -3.59616E-04 | 1.54677E-04 | -3.15101E-05 | 7.74010E-06 |
| 2 | -9.90000E+01 | -6.09690E-03 | 2.88275E-03 | -6.02629E-04 | 8.17650E-05 |
| 3 | -1.97829E+00 | -4.18474E-03 | 4.28508E-03 | -5.83541E-04 | -1.99254E-04 |
| 4 | -7.69594E+00 | 3.83738E-04 | -6.69142E-04 | 2.37920E-03 | -1.48815E-03 |
| 5 | -1.49183E+00 | -2.47141E-02 | 8.93005E-03 | -2.55245E-04 | -2.08211E-03 |
| 6 | -3.87413E-01 | -4.27257E-02 | 2.43621E-02 | -1.09277E-02 | 2.44406E-03 |
| 7 | 9.90000E+01 | -9.18089E-03 | 1.75788E-02 | -1.21382E-02 | 5.03112E-03 |
| 8 | 9.90000E+01 | -9.18089E-03 | 1.75788E-02 | -1.21382E-02 | 5.03112E-03 |
| Surface numeral | A12 | A14 | A16 | A18 | A20 |
| 1 | -1.11888E-06 | 8.28143E-08 | -2.69165E-09 | 0.00000E+00 | 0.00000E+00 |
| 2 | -7.72039E-06 | 4.47896E-07 | -1.16444E-08 | 0.00000E+00 | 0.00000E+00 |
| 3 | 1.00807E-04 | -1.98015E-05 | 2.09280E-06 | -1.16228E-07 | 2.64542E-09 |
| 4 | 4.83425E-04 | -9.22340E-05 | 1.03889E-05 | -6.35413E-07 | 1.61410E-08 |
| 5 | 1.27200E-03 | -3.80117E-04 | 6.27793E-05 | -5.42209E-06 | 1.89713E-07 |
| 6 | 9.29515E-05 | -1.79679E-04 | 3.00810E-05 | -4.19025E-07 | -1.64273E-07 |
| 7 | -1.24754E-03 | 1.80467E-04 | -2.13218E-05 | 3.05686E-06 | -2.35463E-07 |
| 8 | -1.24754E-03 | 1.80467E-04 | -2.13218E-05 | 3.05686E-06 | -2.35463E-07 |

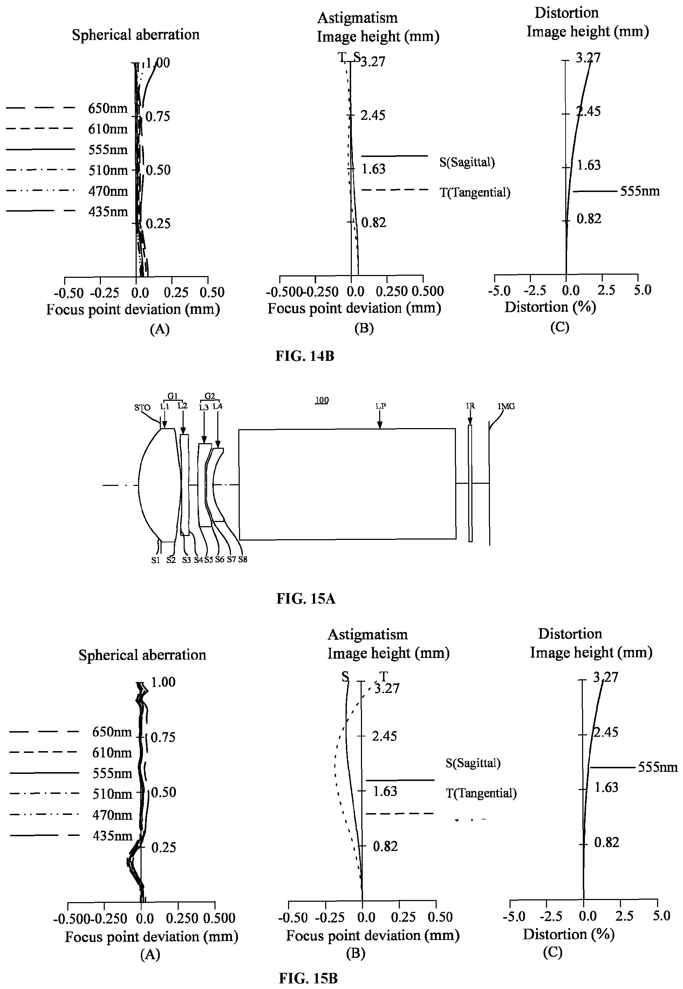

Referring to FIGS. 13B and 14B, from the (A) of the longitudinal spherical aberration diagram, (B) of the light astigmatism diagram, and (C) of the distortion diagram, the longitudinal spherical aberration, the astigmatism, and the distortion of the optical system 100 have been well controlled, thus the optical system 100 of this embodiment has good imaging quality. In addition, the wavelengths corresponding to the diagram in each of (A), (B) and (C) inFIGS. 13B and 14B may refer to the description in the first embodiment regarding (A), (B) and (C) in FIGS. 1B and 1B.

Eighth embodiment

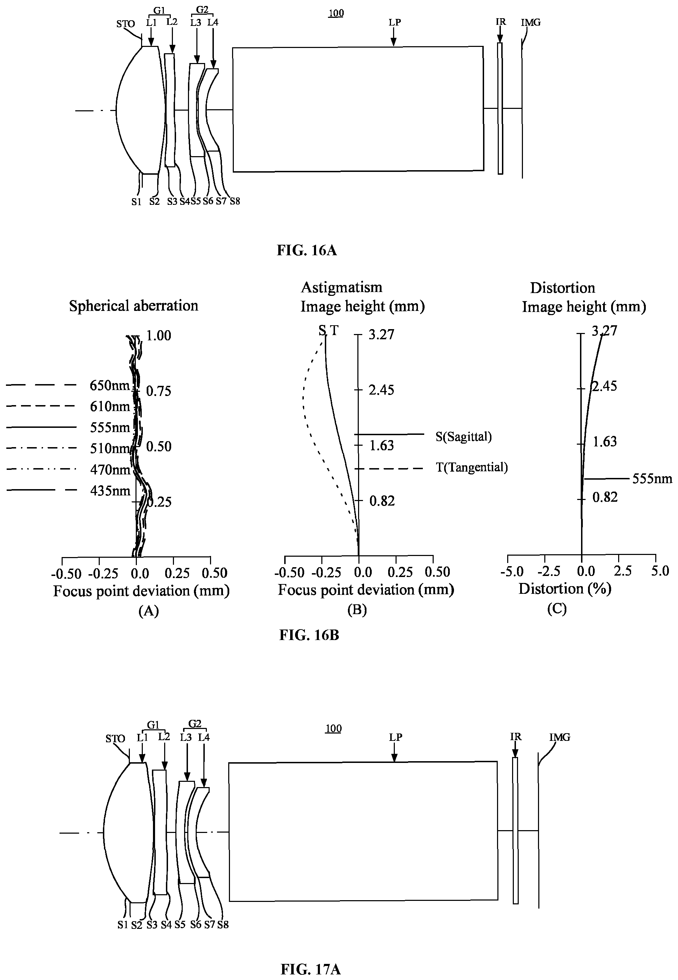

As shown in FIGS. 15A and 16A, the optical system 100 of the present disclosure includes a stop STO, a first lens L1, a second lens L2, a third lens L3, a fourth lens L4, a reflector, and a filter IR sequentially arranged along the optical axis from the object side to the image side. The first lens L1 and the second lens L2 constitute the first lens group, and the third lens L3 and the fourth lens L4 constitute the second lens group.

In this embodiment, the first lens L 1 has positive refractive power. The object side surface S1 and the image side surface S2 of the first lens L1 are both convex near the optical axis. The second lens L2 has negative refractive power. The object side surface S3 of the second lens L2 is convex near the optical axis, and the image side surface S4 of the second lens L2 is concave near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 of the fourth lens L4 is convex near the optical axis, and the image side surface S8 of the fourth lens L4 is concave near the optical axis.

Specifically, the parameters of the optical system 100 are shown in Table 22. The definitions of each parameter may refer to the description of the previous embodiments, which will not be repeated. Correspondingly, Table 23 provides the values of various parameters of the optical system 100 in the telephoto state and short focal state, respectively. Table 24 shows the high-order coefficients that applied for each aspherical lens in the eighth embodiment.

Table 22

| Surface numeral | Surface name | Surface type | Y radius | Thickness | Material | Refractive index | Abbe number | Focal length |
|---|---|---|---|---|---|---|---|---|
| Eighth embodiment | | | | | | | | |
| OBJ | Object side | Sphere | Infinity | A | | | | |
| STO | Stop | Sphere | Infinity | -1.239 | | | | |
| 1 | First lens | Asphere | 4.627 | 2.361 | Plastic | 1.546 | 55.93 | 6.277 |
| 2 | | Asphere | -10.841 | 0.030 | | | | |
| 3 | Second lens | Asphere | 271.758 | 0.400 | Plastic | 1.677 | 19.24 | -203.951 |
| 4 | | Asphere | 91.497 | C | | | | |
| 5 | Third lens | Asphere | 12.263 | 0.390 | Plastic | 1.592 | 28.39 | -10.028 |
| 6 | | Asphere | 3.952 | 0.081 | | | | |
| 7 | Fourth lens | Asphere | 6.537 | 0.380 | Plastic | 1.570 | 37.4 | -18.587 |
| 8 | | Asphere | 3.957 | B | | | | |
| 9 | Reflector | Sphere | Infinity | 12.000 | Glass | 1.750 | 51.01 | |
| 10 | | Sphere | Infinity | 0.700 | | | | |
| 11 | Filter | Sphere | Infinity | 0.210 | Glass | 1.518 | 64.17 | |
| 12 | | Sphere | Infinity | 0.942 | | | | |
| IMG | Imaging plane | Sphere | Infinity | 0 | | | | |

Table 23

| Variable distance | A | B | C | f | FOV | TTL | FNO |
|---|---|---|---|---|---|---|---|
| Telephoto state | Infinity | 1.44 | 0.51 | 16.58 | 22 | 19.44 | 2.56 |
| Short focal state | 300 | 1.27 | 0.68 | 15.53 | 21.4 | 19.44 | 2.4 |

Table 24

| Surface numeral | K | A4 | A6 | A8 | A10 |
|---|---|---|---|---|---|
| Eighth embodiment Asphere coefficient | | | | | |
| 1 | 4.31948E-02 | -3.12526E-03 | 1.12096E-03 | -2.24026E-04 | 3.27872E-05 |
| 2 | 8.07482E+00 | -2.14677E-02 | 1.82256E-02 | -6.05681E-03 | 1.09950E-03 |
| 3 | 0.00000E+00 | 2.70369E-02 | -2.88832E-02 | 1.49223E-02 | -4.97687E-03 |
| 4 | 0.00000E+00 | 6.83194E-02 | -7.44755E-02 | 3.88049E-02 | -1.24808E-02 |
| 5 | 0.00000E+00 | -4.15213E-02 | -2.67420E-02 | 7.11175E-02 | -5.00353E-02 |

(continued)

| Eighth embodiment Asphere coefficient | | | | |
|---|---|---|---|---|
| Surface numeral | K | A4 | A6 | A8 | A10 |
| 6 | -2.23843E+00 | -5.01551E-01 | 9.00166E-01 | -9.39814E-01 | 6.76217E-01 |
| 7 | -6.04962E-01 | -5.29359E-01 | 1.29969E+00 | -1.67253E+00 | 1.32155E+00 |
| 8 | 1.61783E+00 | -1.03921E-01 | 4.54828E-01 | -7.00457E-01 | 2.68084E-01 |
| Surface numeral | A12 | A14 | A16 | A18 | A20 |
| 1 | -3.56659E-06 | 2.38959E-07 | -7.10255E-09 | 0.00000E+00 | 0.00000E+00 |
| 2 | -1.12782E-04 | 6.16006E-06 | -1.39764E-07 | 0.00000E+00 | 0.00000E+00 |
| 3 | 1.07456E-03 | -1.45849E-04 | 1.18932E-05 | -5.27149E-07 | 9.63381E-09 |
| 4 | 2.58479E-03 | -3.39150E-04 | 2.66808E-05 | -1.11008E-06 | 1.75132E-08 |
| 5 | 1.83224E-02 | -3.93023E-03 | 4.98257E-04 | -3.46543E-05 | 1.02098E-06 |
| 6 | -3.27171E-01 | 1.01731E-01 | -1.93060E-02 | 2.02767E-03 | -9.01616E-05 |
| 7 | -5.36347E-01 | -8.12098E-02 | 2.70643E-01 | -1.94469E-01 | 8.25602E-02 |
| 8 | 8.29844E-01 | -1.75693E+00 | 1.81796E+00 | -1.20748E+00 | 5.49538E-01 |
| Surface numeral | A22 | A24 | A26 | A28 | A30 |
| 7 | -2.31201E-02 | 4.31689E-03 | -5.18019E-04 | 3.61772E-05 | -1.11851E-06 |
| 8 | -1.73793E-01 | 3.76428E-02 | -5.33424E-03 | 4.46020E-04 | -1.66993E-05 |

Referring to FIGS. 15B and 16B, from the (A) of the longitudinal spherical aberration diagram, (B) of the light astigmatism diagram, and (C) of the distortion diagram, the longitudinal spherical aberration, the astigmatism, and the distortion of the optical system 100 have been well controlled, thus the optical system 100 of this embodiment has good imaging quality. In addition, the wavelengths corresponding to the diagram in each of (A), (B) and (C) in FIGS. 15B and 16Bmay refer to the description in the first embodiment regarding (A), (B) and (C) in FIGS. 1B and 1B.

Ninth embodiment

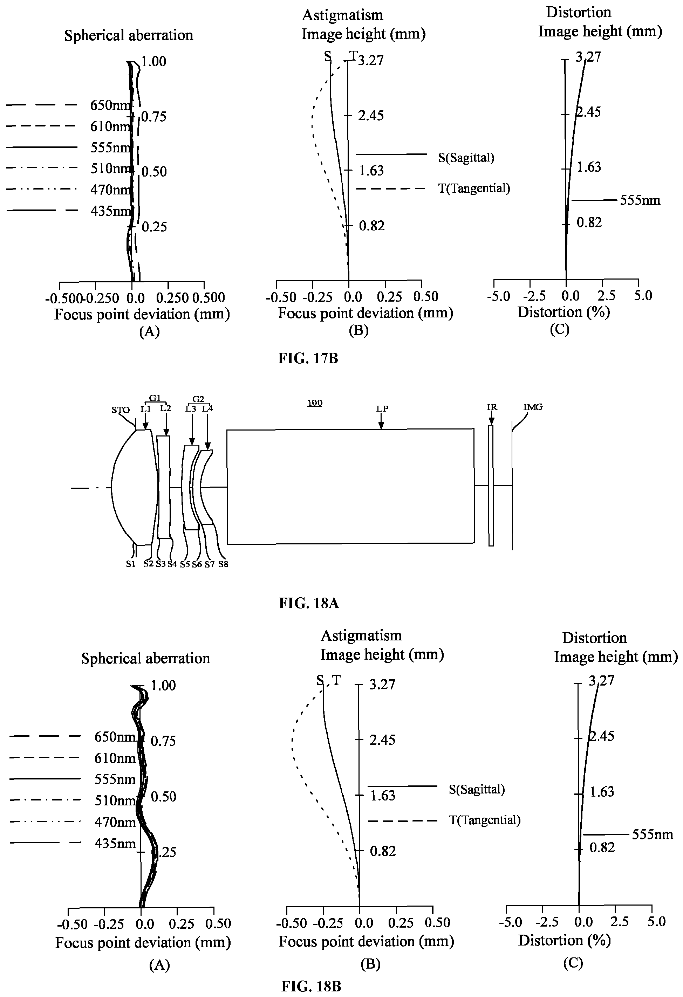

As shown in FIGS. 17A and 18A, the optical system 100 of the present disclosure includes a stop STO, a first lens L1, a second lens L2, a third lens L3, a fourth lens L4, a reflector, and a filter IR sequentially arranged along the optical axis from the object side to the image side. The first lens L1 and the second lens L2 constitute the first lens group, and the third lens L3 and the fourth lens L4 constitute the second lens group.

In this embodiment, the first lens L 1 has positive refractive power. The object side surface S1 and the image side surface S2 of the first lens L1 are both convex near the optical axis. The second lens L2 has negative refractive power. The object side surface S3 of the second lens L2 is convex near the optical axis, and the image side surface S4 of the second lens L2 is concave near the optical axis. The third lens L3 has negative refractive power. The object side surface S5 of the third lens L3 is convex near the optical axis, and the image side surface S6 of the third lens L3 is concave near the optical axis. The fourth lens L4 has negative refractive power. The object side surface S7 of the fourth lens L4 is convex near the optical axis, and the image side surface S8 of the fourth lens L4 is concave near the optical axis.

Specifically, the parameters of the optical system 100 are shown in Table 25. The definitions of each parameter may refer to the description of the previous embodiments, which will not be repeated. Correspondingly, Table 26 provides the values of various parameters of the optical system 100 in the telephoto state and short focal state, respectively. Table 27 shows the high-order coefficients that applied for each aspherical lens in the ninth embodiment.

Table 25

| Ninth embodiment | | | | | | | | |
|---|---|---|---|---|---|---|---|---|
| Surface numeral | Surface name | Surface type | Y radius | Thickness | Material | Refractive index | Abbe number | Focal length |
| OBJ | Object side | Sphere | Infinity | A | | | | |

(continued)

| Surface numeral | Surface name | Surface type | Y radius | Thickness | Material | Refractive index | Abbe number | Focal length |
|---|---|---|---|---|---|---|---|---|
| | | | | | | Ninth embodiment | | |
| STO | Stop | Sphere | Infinity | -1.172 | | | | |
| 1 | First lens | Asphere | 4.697 | 2.246 | Plastic | 1.546 | 55.93 | 6.327 |
| 2 | | Asphere | -10.854 | 0.030 | | | | |
| 3 | Second lens | Asphere | 278.391 | 0.532 | Plastic | 1.677 | 19.24 | -129.486 |
| 4 | | Asphere | 66.613 | C | | | | |
| 5 | Third lens | Asphere | 7.791 | 0.390 | Plastic | 1.592 | 28.39 | -9.813 |
| 6 | | Asphere | 3.265 | 0.141 | | | | |
| 7 | Fourth lens | Asphere | 4.885 | 0.380 | Plastic | 1.570 | 37.4 | -21.816 |
| 8 | | Asphere | 3.408 | B | | | | |
| 9 | Reflector | Sphere | Infinity | 12.000 | Glass | 1.750 | 51.01 | |
| 10 | | Sphere | Infinity | 0.700 | | | | |
| 11 | Filter | Sphere | Infinity | 0.210 | Glass | 1.518 | 64.17 | |
| 12 | | Sphere | Infinity | 0.934 | | | | |
| IMG | Imaging plane | Sphere | Infinity | 0 | | | | |

Table 26

| Variable distance | A | B | C | f | FOV | TTL | FNO |
|---|---|---|---|---|---|---|---|
| Telephoto state | Infinity | 1.46 | 0.429 | 16.58 | 22 | 19.45 | 2.61 |
| Short focal state | 300 | 1.29 | 0.518 | 15.54 | 21.4 | 19.45 | 2.45 |

Table 27

| Surface numeral | K | A4 | A6 | A8 | A10 |
|---|---|---|---|---|---|
| | | | Ninth embodiment Asphere coefficient | | |
| 1 | 6.17137E-02 | -4.34431E-03 | 2.40446E-03 | -7.34744E-04 | 1.39742E-04 |
| 2 | 8.01339E+00 | -8.19329E-03 | 8.07146E-03 | -2.81049E-03 | 5.51804E-04 |
| 3 | 0.00000E+00 | 4.05658E-02 | -4.47716E-02 | 2.29109E-02 | -7.29623E-03 |
| 4 | 0.00000E+00 | 7.36939E-02 | -9.17325E-02 | 5.46848E-02 | -2.00607E-02 |
| 5 | -4.98505E-01 | -9.45165E-02 | 8.95927E-02 | -3.80528E-02 | 5.26256E-03 |
| 6 | -2.03416E+00 | -2.97659E-01 | 3.95229E-01 | -2.23585E-01 | 4.39361E-02 |
| 7 | -2.95070E+00 | -1.39215E-01 | 1.06621E-01 | 3.95804E-01 | -1.15002E+00 |
| 8 | 8.12124E-01 | 1.13739E-02 | -8.40132E-02 | 5.71804E-01 | -1.83310E+00 |
| Surface numeral | A12 | A14 | A16 | A18 | A20 |
| 1 | -1.61239E-05 | 1.01787E-06 | -2.68601E-08 | 0.00000E+00 | 0.00000E+00 |
| 2 | -6.19941E-05 | 3.74562E-06 | -9.50609E-08 | 0.00000E+00 | 0.00000E+00 |
| 3 | 1.51320E-03 | -2.01254E-04 | 1.63439E-05 | -7.27808E-07 | 1.33609E-08 |
| 4 | 4.76053E-03 | -7.26937E-04 | 6.85064E-05 | -3.60033E-06 | 8.00640E-08 |
| 5 | 1.78562E-03 | -9.45599E-04 | 1.83551E-04 | -1.73298E-05 | 6.61623E-07 |

(continued)

| Surface numeral | A12 | A14 | A16 | A18 | A20 |
|---|---|---|---|---|---|
| 6 | 1.40852E-02 | -1.03668E-02 | 2.57292E-03 | -3.06084E-04 | 1.46472E-05 |
| 7 | 1.64625E+00 | -1.57369E+00 | 1.07507E+00 | -5.34413E-01 | 1.93384E-01 |
| 8 | 3.51973E+00 | -4.48977E+00 | 3.98681E+00 | -2.52021E+00 | 1.14221E+00 |
| Surface numeral | A22 | A24 | A26 | A28 | A30 |
| 7 | -5.03434E-02 | 9.17595E-03 | -1.11061E-03 | 8.01347E-05 | -2.60731E-06 |
| 8 | -3.68637E-01 | 8.27237E-02 | -1.22682E-02 | 1.08101E-03 | -4.28513E-05 |

Referring to FIGS.17B and 18B, from the (A) of the longitudinal spherical aberration diagram, (B) of the light astigmatism diagram, and (C) of the distortion diagram, the longitudinal spherical aberration, the astigmatism, and the distortion of the optical system 100 have been well controlled, thus the optical system 100 of this embodiment has good imaging quality. In addition, the wavelengths corresponding to the diagram in each of (A), (B) and (C) in FIGS.17B and 18B may refer to the description in the first embodiment regarding (A), (B) and (C) in FIGS. 1B and 1B.

Referring to Table 28, which provides a summary of the ratios in various relationships of the first to fifth embodiments of the present disclosure.

Table 28

| Relationship/Embodiment | First embodiment | Second embodiment | Third embodiment | Fourth embodiment | Fifth embodiment |
|---|---|---|---|---|---|
| f1/fmax | 0.432 | 0.560 | 0.551 | 0.509 | 0.528 |
| \|f2/fmax\| | 1.680 | 7.102 | 4.453 | 2.394 | 22.447 |
| F3/fmax | -1.481 | -1.137 | -0.911 | -0.658 | -0.907 |
| f4/fmax | -1.463 | -2.204 | -2.595 | -2.495 | -3.432 |
| f12/fmax | 0.560 | 0.553 | 0.526 | 0.459 | 0.546 |
| f34/fmax | -0.746 | -0.754 | -0.673 | -0.509 | -0.712 |
| f34/F12 | -1.333 | -1.364 | -1.278 | -1.110 | -1.304 |
| fmax/R11 | 3.057 | 3.352 | 3.410 | 3.694 | 3.164 |
| \|R12/fmax\| | 0.734 | 10.247 | 10.247 | 8.946 | 2.810 |
| \|R21/fmax\| | 0.366 | 0.450 | 0.451 | 0.450 | 0.398 |
| \|R22/fmax\| | 0.557 | 0.431 | 0.410 | 0.368 | 0.409 |
| fmax/R31 | 6.519 | 6.196 | 5.733 | 5.351 | 5.450 |
| fmax/R32 | 8.158 | 8.134 | 8.045 | 8.307 | 7.734 |
| \|fmax/R41\| | 2.799 | 1.639 | 0.311 | 0.874 | 0.381 |
| \|fmax/R42\| | 1.562 | 0.831 | 0.364 | 1.596 | 0.895 |
| TTL/Dlmax | 3.564 | 3.492 | 3.590 | 3.593 | 3.446 |
| TTL/fmax | 1.218 | 1.235 | 1.228 | 1.200 | 1.247 |
| TTL/ImgH | 6.208 | 6.269 | 6.232 | 6.239 | 6.101 |
| ΣCT/CT12 | 1.318 | 1.289 | 1.306 | 1.375 | 1.294 |
| ΣCT/CT34 | 4.140 | 4.464 | 4.271 | 3.669 | 4.401 |
| CT12/CT34 | 3.140 | 3.464 | 3.271 | 2.669 | 3.401 |
| \|R12/R11\| | 2.243 | 34.350 | 34.939 | 33.043 | 8.891 |
| R21/R22 | 0.656 | 1.046 | 1.099 | 1.223 | 0.974 |
| R31/R32 | 1.251 | 1.313 | 1.403 | 1.552 | 1.419 |

(continued)

| Relationship/Embodiment | First embodiment | Second embodiment | Third embodiment | Fourth embodiment | Fifth embodiment |
|---|---|---|---|---|---|
| |R41/R42| | 0.558 | 0.507 | 1.173 | 1.826 | 2.350 |
| SD22/SD31 | 1.228 | 1.154 | 1.156 | 1.173 | 1.184 |
| CT1/CT2 | 3.941 | 2.260 | 2.243 | 2.249 | 2.316 |
| CT4/CT3 | 0.954 | 1.000 | 0.903 | 1.586 | 0.933 |
| CT1/(|SAGYS11|+|SAGYS12|) | 1.500 | 1.458 | 1.470 | 1.354 | 1.402 |
| CT4/(|SAGYS41|+|SAGYS42|) | 2.372 | 11.777 | 1.906 | 1.747 | 1.001 |
| fmax/ImgH | 5.095 | 5.076 | 5.076 | 5.199 | 4.893 |
| Cz2-Cz1 (unit: mm) | 0.367 | 0.398 | 0.343 | 0.255 | 0.346 |
| SD11/SD42 | 1.697 | 1.561 | 1.554 | 1.574 | 1.574 |
| SD11/ImgH | 1.009 | 1.005 | 1.005 | 1.029 | 1.062 |
| CT3/AT34 | 0.365 | 0.397 | 0.505 | 0.474 | 0.512 |
| CT2/AT12 | 1.060 | 1.071 | 1.122 | 1.245 | 1.051 |
| CT1/(CT2+CT3+CT4) | 1.531 | 1.164 | 1.126 | 1.014 | 1.173 |
| AT23max/(AT12+AT34) | 0.407 | 0.277 | 0.271 | 0.233 | 0.301 |
| P/(TTL-P) | 1.446 | 1.412 | 1.432 | 1.429 | 1.509 |

Table 29 is a summary of the ratios in various relationships of the sixth to ninth embodiments of the present disclosure.

Table 29

| Relationship/Embodiment | Sixth embodiment | Seventh embodiment | Eighth embodiment | Ninth embodiment |
|---|---|---|---|---|
| f1/fmax | 0.467 | 0.400 | 0.379 | 0.382 |
| |f2/fmax| | 10.666 | 8.144 | 12.301 | 7.810 |
| F3/fmax | -0.778 | -0.696 | -0.605 | -0.592 |
| f4/fmax | -3.125 | -1.396 | -1.121 | -1.316 |
| f12/fmax | 0.510 | 0.436 | 0.388 | 0.396 |
| f34/fmax | -0.618 | -0.459 | -0.385 | -0.398 |
| f34/F12 | -1.213 | -1.052 | -0.992 | -1.003 |
| fmax/R11 | 3.179 | 3.680 | 3.583 | 3.530 |
| |R12/fmax| | 1.152 | 0.945 | 0.654 | 0.655 |
| |R21/fmax| | 0.381 | 0.388 | 16.391 | 16.791 |
| |R22/fmax| | 0.425 | 0.438 | 5.519 | 4.018 |
| fmax/R31 | 5.061 | 4.133 | 1.352 | 2.128 |
| fmax/R32 | 7.596 | 6.801 | 4.196 | 5.078 |
| |fmax/R41| | 0.081 | 0.780 | 2.536 | 3.394 |
| |fmax/R42| | 0.480 | 0.473 | 4.190 | 4.865 |
| TTL/Dlmax | 3.449 | 3.646 | 4.504 | 4.502 |
| TTL/fmax | 1.236 | 1.169 | 1.172 | 1.173 |
| TTL/ImgH | 6.049 | 6.220 | 5.945 | 5.948 |

(continued)

| Relationship/Embodiment | Sixth embodiment | Seventh embodiment | Eighth embodiment | Ninth embodiment |
|---|---|---|---|---|
| ΣCT/CT12 | 1.276 | 1.306 | 1.279 | 1.277 |
| ΣCT/CT34 | 4.621 | 4.265 | 4.585 | 4.608 |
| CT12/CT34 | 3.621 | 3.265 | 3.585 | 3.608 |
| \|R12/R11\| | 3.664 | 3.477 | 2.343 | 2.311 |
| R21/R22 | 0.897 | 0.885 | 2.970 | 4.179 |
| R31/R32 | 1.501 | 1.646 | 3.103 | 2.386 |
| \|R41/R42\| | 5.917 | 0.607 | 1.652 | 1.433 |
| SD22/SD31 | 1.165 | 1.115 | 1.140 | 1.141 |
| CT1/CT2 | 2.438 | 2.459 | 5.901 | 4.223 |
| CT4/CT3 | 0.983 | 1.251 | 0.974 | 0.974 |
| CT1/(\|SAGYS11\|+\|SAGYS12\|) | 1.448 | 1.694 | 1.501 | 1.500 |
| CT4/(\|SAGYS41\|+\|SAGYS42\|) | 1.469 | 2.417 | 0.380 | 0.375 |
| fmax/ImgH | 4.893 | 5.321 | 5.070 | 5.070 |
| Cz2-Cz1 (unit: mm) | 0.287 | 0.238 | 0.166 | 0.175 |
| SD11/SD42 | 1.564 | 1.497 | 1.720 | 1.719 |
| SD11/ImgH | 1.039 | 0.933 | 0.989 | 0.970 |
| CT3/AT34 | 0.469 | 0.522 | 4.838 | 2.764 |
| CT2/AT12 | 1.132 | 1.343 | 13.333 | 17.730 |
| CT1/(CT2+CT3+CT4) | 1.251 | 1.194 | 2.018 | 1.726 |
| AT23max/(AT12+AT34) | 0.239 | 0.242 | 6.101 | 3.512 |
| P/(TTL-P) | 1.542 | 1.439 | 1.613 | 1.611 |

Table 30 shows the maximum effective half-aperture values of the surfaces of the first lens L1 to the fourth lens L4 in the first to fifth embodiments of the present disclosure.

Table 30

| Parameter | First embodiment | Second embodiment | Third embodiment | Fourth embodiment | Fifth embodiment |
|---|---|---|---|---|---|
| SD11 | 3.29879 | 3.28647 | 3.28666 | 3.36586 | 3.47204 |
| SD12 | 3.11455 | 3.09679 | 3.11792 | 3.23168 | 3.36121 |
| SD21 | 2.95624 | 2.87186 | 2.92443 | 3.05458 | 3.15570 |
| SD22 | 2.79501 | 2.65410 | 2.70434 | 2.81334 | 2.91091 |
| SD31 | 2.27616 | 2.30077 | 2.34024 | 2.39747 | 2.45765 |
| SD32 | 2.06285 | 2.08658 | 2.10112 | 2.10608 | 2.21641 |
| SD41 | 2.01400 | 2.05814 | 2.07533 | 2.07443 | 2.18250 |
| SD42 | 1.94444 | 2.10499 | 2.11523 | 2.13905 | 2.20602 |

Table 31 shows the maximum effective half-aperture values of the surfaces of each of the first lens L1 to the fourth lens L4 in the sixth to ninth embodiments of the present disclosure.

Table 31

| Parameter | Sixth embodiment | Seventh embodiment | Eighth embodiment | Ninth embodiment |
|---|---|---|---|---|
| SD11 | 3.39843 | 3.05106 | 3.23404 | 3.17303 |
| SD12 | 3.26533 | 2.86694 | 3.02572 | 2.97207 |
| SD21 | 3.04119 | 2.67486 | 2.87110 | 2.82986 |
| SD22 | 2.79630 | 2.46334 | 2.69410 | 2.64875 |
| SD31 | 2.39961 | 2.20878 | 2.36319 | 2.32165 |
| SD32 | 2.17852 | 2.03306 | 2.11083 | 2.06720 |
| SD41 | 2.14871 | 2.01527 | 2.09050 | 2.03675 |
| SD42 | 2.17322 | 2.03747 | 1.88016 | 1.84638 |

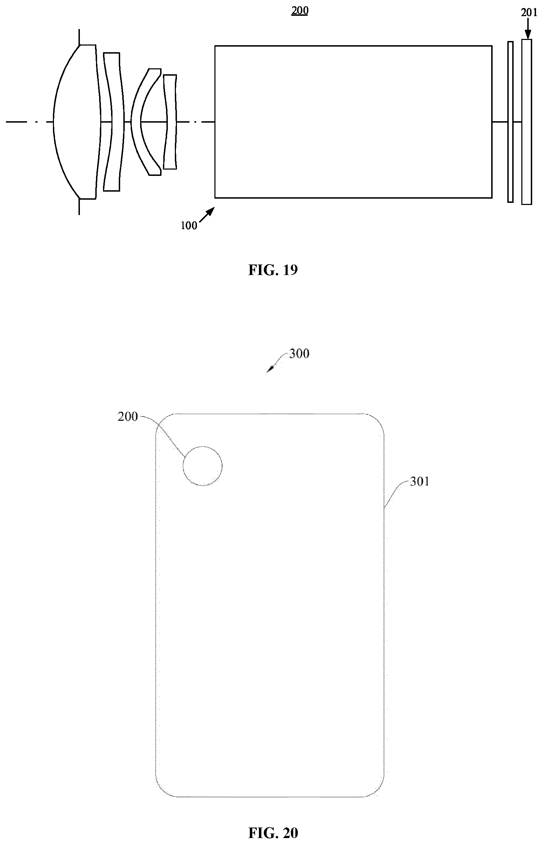

Referring to FIG. 19, the present disclosure further provides a camera module 200. The camera module 200 includes an image sensor 201 and an optical system 100 described in any of the first to ninth embodiments of the first aspect. The image sensor 201 is disposed at the image side of the optical system 100. The optical system 100 is used to receive a light signal of a subject and project the light signal onto the image sensor 201. The image sensor 201 is used to convert the light signal from the subject into an image signal. The camera module 200 including the optical system 100 mentioned above has all the technical effects of the optical system 100, which may reduce the difficulty of zooming and achieve mass production based on a miniaturization design.

Referring to FIG. 20, the present disclosure further provides an electronic device 300. The electronic device 300 includes a housing 301 and the camera module 200 mentioned above. The camera module 200 is provided in the housing 301. The camera module 200 may be installed inside or on the housing 301. The electronic device 300 may be, but not limited to a mobile phone, a tablet computer, a laptop, a smartwatch, a monitor, etc. The electronic device 300 including the camera module 200 also has all the technical effects of the optical system 100, which may reduce the difficulty of zooming and achieve mass production based on a miniaturization design.

The above description provides a detailed introduction to the optical system, the camera module, and the electronic device according to the present disclosure. Specific examples are used to explain the principles and implementation methods of the present disclosure. The above embodiments are used to help understanding the principles of the optical system, the camera module, the electronic device. Those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

**Claims**

1. An optical system (100) **characterized by** consisting of fourth lenses having refractive power, from an object side to an image side along an optical axis of the optical system (100), the optical system (100) sequentially comprising:

   a first lens group (G1) comprising a first lens (L1) and a second lens (L2) sequentially arranged from the object side to the image side along the optical axis, wherein the first lens (L1) has positive refractive power, an object side surface (S1) of the first lens (L1) is convex near the optical axis, and the second lens (L2) has refractive power; and
   a second lens group (G2) comprising a third lens (L3) and a fourth lens (L4) sequentially arranged from the object side to the image side along the optical axis, the third lens (L3) has negative refractive power, an object side surface (S5) of the third lens (L3) is convex near the optical axis, an image side of the third lens (L3) is concave near the optical axis, and the fourth lens (L4) has negative refractive power;
   wherein the first lens group (G1) is fixed relative to an imaging plane (IMG) of the optical system (100), the second lens group (G2) is movable along the optical axis between the first lens group (G1) and the imaging plane (IMG) of the optical system (100);
   the optical system (100) satisfies following relationships: 14deg<FOV<30deg, and 2<FNO<3.5;
   wherein FOV is a maximum field of view of the optical system (100), and FNO is an F-number of the optical system.

2. The optical system (100) according to claim 1, **characterized in that**, the optical system (100) further satisfies at least one of following relationships:

$$0.25 < f1/fmax < 0.7;$$

$$-1.7 < f3/fmax < -0.4;$$

and

$$-4 < f4/fmax < -0.9;$$

wherein f1 is a focal length of the first lens (L1), f3 is a focal length of the third lens (L3), f4 is a focal length of the fourth lens (L4), fmax is a maximum focal length of the optical system (100).

3. The optical system (100) according to claim 1 or 2, **characterized in that**, the optical system (100) further satisfies at least one of following relationships:

$$0.25 < f12/fmax < 0.7;$$

$$-0.8 < f34/fmax < -0.35;$$

and

$$-1.4 < f34/f12 < -0.9;$$

wherein fmax is a maximum focal length of the optical system (100), f12 is a combined focal length of the first lens (L1) and the second lens (L2), and f34 is a combined focal length of the third lens (L3) and the fourth lens (L4).

4. The optical system (100) according to any one of claims 1 to 3, **characterized in that**, the optical system (100) further satisfies at least one of following relationships:

$$2.9 < fmax/R11 < 3.8;$$

$$0.9 < fmax/R31;$$

and

$$3 < fmax/R32;$$

wherein R11 is a radius of curvature of the object side surface (S1) of the first lens (L1) at the optical axis, R31 is a radius of curvature of the object side surface (S5) of the third lens (L3) at the optical axis, R32 is a radius of curvature of the image side surface (S6) of the third lens (L3) at the optical axis, and fmax is a maximum focal length of the optical system (100).

5. The optical system (100) according to any one of claims 1 to 4, **characterized in that**, the optical system (100) further satisfies at least one of following relationships:

$$3 < TTL/DLmax < 5;$$

$$1 < TTL/fmax < 1.4;$$

$$4.2 < TTL/ImgH < 8;$$

and

$$4<\text{fmax/ImgH}<6;$$

wherein DLmax is a maximum distance from the object side surface (S1) of the first lens (L 1) to an image side surface (S8) of the fourth lens (L4) at the optical axis, TTL is a distance from the object side surface (S1) of the first lens (L1) to the imaging plane (IMG) of the optical system (100) at the optical axis, ImgH is half of an image height corresponding to the maximum field of view of the optical system (100), and fmax is a maximum focal length of the optical system (100).

6. The optical system (100) according to any one of claims 1 to 5, **characterized in that**, the optical system (100) further satisfies at least one of following relationships:

$$0.6<\text{R21/R22}<5;$$

and

$$1.05<\text{R31/R32}<4;$$

wherein R21 is a radius of curvature of an object side surface (S3) of the second lens (L2) at the optical axis, R22 is a radius of curvature of an image side surface (S4) of the second lens (L2) at the optical axis, R31 is a radius of curvature of the object side surface (S5 of the third lens (L3) at the optical axis, and R32 is a radius of curvature of the image side surface (S6) of the third lens (L3) at the optical axis.

7. The optical system (100) according to any one of claims 1 to 6, **characterized in that**, the optical system (100) further satisfies at least one of following relationships:

$$1.1<\sum\text{CT/CT12}<1.7;$$

$$3<\sum\text{CT/CT34}<5.5;$$

and

$$2<\text{CT12/CT34}<4.5;$$

wherein CT12 is a sum of thicknesses of the first lens (L1) and the second lens (L2) at the optical axis, CT34 is a sum of thicknesses of the third lens (L3) and the fourth lens (L4) at the optical axis, $\Sigma$CT is a sum of the thicknesses of the first lens (L 1), the second lens (L2), the third lens (L3), and the fourth lens (L4) at the optical axis.

8. The optical system (100) according to any one of claims 1 to 7, **characterized in that**, the optical system (100) further satisfies at least one of following relationships:

$$1.8<\text{CT1/CT2}<8;$$

$$0.7<\text{CT4/CT3}<1.8;$$

and

$$0.8<\text{CT1/(CT2+CT3+CT4)}<2.3;$$

wherein CT1 is a thickness of the first lens (L1) at the optical axis, CT2 is a thickness of the second lens (L2) at the optical axis, CT3 is a thickness of the third lens (L3) at the optical axis, CT4 is a thickness of the fourth lens (L4) at the optical axis.

9. The optical system (100) according to any one of claims 1 to 8, **characterized in that**, the optical system (100) further satisfies at least one of following relationships:

$$0.9<CT2/AT12<40;$$

$$0.25<CT3/AT34<7;$$

and

$$0.1<AT23max/(AT12+AT34)<6.5;$$

wherein CT2 is the thickness of the second lens (L2) at the optical axis, CT3 is the thickness of the third lens (L3) at the optical axis, AT12 is a distance from an image side surface (S2) of the first lens (L 1) to an object side surface (S3) of the second lens (L2) at the optical axis, AT34 is a distance from the image side surface (S6) of the third lens (L3) to an object side surface (S7) of the fourth lens (L4) at the optical axis, and AT23max is a maximum distance from an image side surface (S4) of the second lens (L2) to the object side surface (S5) of the third lens (L3) at the optical axis.

10. The optical system (100) according to any one of claims 1 to 9, **characterized in that**, the optical system (100) further satisfies at least one of following relationships:

$$1<SD22/SD31<1.3;$$

$$1.2<SD11/SD42<2;$$

and

$$0.8<SD11/ImgH<1.2;$$

wherein SD22 is a maximum effective half-aperture of an image side surface (S4) of the second lens (L2), SD31 is a maximum effective half-aperture of the object side surface (S5) of the third lens (L3), SD11 is a maximum effective half-aperture of the object side surface (S1) of the first lens (L1), SD42 is a maximum effective half-aperture of an image side surface (S8) of the fourth lens (L4), ImgH is half of an image height corresponding to the maximum field of view of the optical system (100).

11. The optical system (100) according to any one of claims 1 to 10, **characterized in that**, the optical system (100) further satisfies at least one of following relationships:

$$1<CT1/(|SAGYS11|+|SAGYS12|)<2;$$

$$0.3<CT4/(|SAGYS41|+|SAGYS42|);$$

and

$$0.05mm<Cz2-Cz1<0.6mm;$$

wherein CT1 is a thickness of the first lens (L1) at the optical axis, CT4 is a thickness of the fourth lens (L4) at the optical axis, SAGYS11 is a distance along the optical axis from the maximum effective half-aperture of the object side surface (S1) of the first lens (L1) to an intersection between the object side surface (S1) of the first lens (L 1) and the optical axis, SAGYS12 is a distance along the optical axis from a maximum effective half-aperture of an image side surface (S2) of the first lens (L1) to an intersection between the image side surface (S2) of the first lens (L 1) and the optical axis, SAGYS41 is a distance along the optical axis from a maximum effective half-aperture of an object side surface (S7) of the fourth lens (L4) to an intersection between the object side surface (S7) of the fourth lens (L4) and the optical axis, SAGYS42 is a distance along the optical axis from the maximum effective half-aperture of an image side surface (S8) of the fourth lens (L4) to an intersection between the image side surface (S8) of the fourth lens (L4) and the optical axis, Cz1 is a distance from the object side surface of the second lens (L2) to the image side surface (S6) of the third lens (L3) at the optical axis when the optical system (100) is in a telephoto state, and Cz2 is a distance from the object side surface (S3) of the second lens (L2) to the image side surface (S6) of the third lens (L3) when the optical system (100) is in a short focal state.

12. The optical system (100) according to any one of claims 1 to 11, **characterized in that**, the optical system (100) further comprises a reflector (LP) located between an image side surface (S8) of the fourth lens (L4) and the imaging plane (IMG) of the optical system (100).

13. The optical system (100) according to claim 12, **characterized in that**, the reflector (LP) comprises a prism configured to bend an optical path at least twice; or

the reflector (LP) comprises a prism, the prism comprises a light incident surface (LP1), a first reflection surface (RF1), a second reflection surface (RF2), and a light exit surface (LP2) sequentially connected to each other, the light incident surface (LP1) and the first reflection surface (RF1) define a first angle ($\alpha$), the second reflection surface (RF2) and the light exit surface (LP2) define a second angle ($\beta$), and each of the first angle ($\alpha$) and the second angle ($\beta$) is in a range from 30° to 40°; or,
the optical system (100) further satisfies at least one of following relationships: $1.1 < P/(TTL-P) < 2$, and $10$ mm $< PL < 18$ mm, wherein P is a length of the reflector (LP) at the optical axis, TTL is a distance from the object side surface (S1) of the first lens (L1) to the imaging plane (IMG) of the optical system (100) at the optical axis, and PL is a distance at the optical axis from a point of the optical system (100) closest to the object side to another point of the optical system (100) closest to the image side.

14. A camera module (200), **characterized by** comprising:

an image sensor (201); and
an optical system (100) according to any one of claims 1 to 13, wherein the image sensor (201) is disposed at the image side of the optical system (100).

15. An electronic device (300), **characterized by** comprising:

a housing (301); and
a camera module (200) according to claim 14, wherein the camera module (200) is arranged on the housing (301).

**FIG. 1A**

Spherical aberration

Astigmatism
Image height (mm)

Distortion
Image height (mm)

Focus point deviation (mm)
(A)

Focus point deviation (mm)
(B)

Distortion (%)
(C)

**FIG. 1B**

**FIG. 2A**

Spherical aberration

Astigmatism
Image height (mm)

Distortion
Image height (mm)

— — — 650nm
— — — — 610nm
———— 555nm
—·—·—· 510nm
—··—··—· 470nm
——— — 435nm

S(Sagittal)
— — — T(Tangential)

555nm

-0.50 -0.25 0.0 0.25 0.50
Focus point deviation (mm)

(A)

-0.50 -0.25 0.0 0.25 0.50
Focus point deviation (mm)

(B)

-5.0 -2.5 0.0 2.5 5.0
Distortion (%)

(C)

**FIG. 2B**

**FIG. 2C**

**FIG. 2D**

**FIG. 2E**

**FIG. 2F**

**FIG. 3A**

Spherical aberration

Astigmatism
Image height (mm)

Distortion
Image height (mm)

— — — 650nm
— — — 610nm
———— 555nm
—·—·— 510nm
—··—··— 470nm
———— 435nm

S(Sagittal)

T(Tangential)

555nm

Focus point deviation (mm)

(A)

Focus point deviation (mm)

(B)

Distortion (%)

(C)

**FIG. 3B**

**FIG. 4A**

Spherical aberration

— — — 650nm
— — — — 610nm
———————— 555nm
— · — · — 510nm
— · · — · · · 470nm
———————— 435nm

-0.50 -0.25 0.0 0.25 0.50
Focus point deviation (mm)

(A)

Astigmatism
Image height (mm)

——————— S(Sagittal)
— — — — T(Tangential)

-0.50 -0.25 0.0 0.25 0.50
Focus point deviation (mm)

(B)

Distortion
Image height (mm)

———————— 555nm

-5.0 -2.5 0.0 2.5 5.0
Distortion (%)

(C)

**FIG. 4B**

**FIG. 5A**

Spherical aberration

Astigmatism
Image height (mm)

Distortion
Image height (mm)

— — — 650nm
— — — — 610nm
———————— 555nm
— · — · — · 510nm
— · · — · · — · 470nm
———— — 435nm

S(Sagittal)
T(Tangential)

555nm

-0.50 -0.25 0.0 0.25 0.50
Focus point deviation (mm)

(A)

-0.50 -0.25 0.0 0.25 0.50
Focus point deviation (mm)

(B)

-5.0 -2.5 0.0 2.5 5.0
Distortion (%)

(C)

**FIG. 5B**

**FIG. 6A**

Spherical aberration

Astigmatism
Image height (mm)

Distortion
Image height (mm)

— — — 650nm
— — — — 610nm
———————— 555nm
— · — · — · 510nm
— · · — · · — · 470nm
———— — 435nm

S(Sagittal)
T(Tangential)

555nm

-0.50 -0.25 0.0 0.25 0.50
Focus point deviation (mm)

(A)

-0.50 -0.25 0.0 0.25 0.50
Focus point deviation (mm)

(B)

-5.0 -2.5 0.0 2.5 5.0
Distortion (%)

(C)

**FIG. 6B**

FIG. 7A

Spherical aberration

— — — 650nm
— — — — 610nm
————— 555nm
— · — · — 510nm
— ·· — ·· — 470nm
————— 435nm

-0.50 -0.25 0.0 0.25 0.50
Focus point deviation (mm)

(A)

Astigmatism
Image height (mm)

————— S(Sagittal)
— — — — T(Tangential)

-0.50 -0.25 0.0 0.25 0.50
Focus point deviation (mm)

(B)

Distortion
Image height (mm)

————— 555nm

-5.0 -2.5 0.0 2.5 5.0
Distortion (%)

(C)

FIG. 7B

FIG. 8A

Spherical aberration

Astigmatism
Image height (mm)

Distortion
Image height (mm)

FIG. 8B

FIG. 9A

Spherical aberration

Astigmatism
Image height (mm)

Distortion
Image height (mm)

FIG. 9B

FIG. 10A

Spherical aberration

Astigmatism
Image height (mm)

Distortion
Image height (mm)

— — — 650nm
— — — — 610nm
——————— 555nm
— · — · — 510nm
— ·· — ·· — 470nm
——— — 435nm

S(Sagittal)
— — — T(Tangential)

——————555nm

-0.50 -0.25 0.0 0.25 0.50
Focus point deviation (mm)
(A)

-0.500 -0.250 0.0 0.250 0.500
Focus point deviation (mm)
(B)

-5.0 -2.5 0.0 2.5 5.0
Distortion (%)
(C)

FIG. 10B

FIG. 11A

Spherical aberration

Astigmatism
Image height (mm)

Distortion
Image height (mm)

— — — 650nm
— — — — 610nm
—————— 555nm
— · — · — · 510nm
— ·· — ·· — · 470nm
—————— 435nm

-1.00
0.75
0.50
0.25

S T 3.27

2.45

1.63      S(Sagittal)

— — — — T(Tangential)

0.82

3.27

2.45

————— 555nm

1.63

0.82

-0.50 -0.25 0.0 0.25 0.50
Focus point deviation (mm)

(A)

-0.500-0.250 0.0 0.250 0.500
Focus point deviation (mm)

(B)

-5.0 -2.5 0.0 2.5 5.0
Distortion (%)

(C)

**FIG. 11B**

STO G1 G2 100 LP IR IMG
L1 L2 L3 L4

S1   S2 S3   S4 S5  S6 S7 S8

**FIG. 12A**

Spherical aberration

Astigmatism
Image height (mm)

Distortion
Image height (mm)

— — — 650nm
— — — — 610nm
—————— 555nm
— · — · — · 510nm
— ·· — ·· — · 470nm
—————— 435nm

1.00
0.75
0.50
0.25

T S 3.27

2.45

1.63      S(Sagittal)

— — — — T(Tangential)

0.82

3.27

2.45

1.63

————— 555nm

0.82

-0.50 -0.25 0.0 0.25 0.50
Focus point deviation (mm)

(A)

-0.500-0.250 0.0 0.250 0.500
Focus point deviation (mm)

(B)

-5.0 -2.5 0.0 2.5 5.0
Distortion (%)

(C)

**FIG. 12B**

**FIG. 13A**

Spherical aberration

650nm
610nm
555nm
510nm
470nm
435nm

-0.50  -0.25  0.0  0.25  0.50
Focus point deviation (mm)
(A)

Astigmatism
Image height (mm)

S T 3.27

2.45

S(Sagittal)
1.63
T(Tangential)

0.82

-0.500 -0.250  0.0  0.250 0.500
Focus point deviation (mm)
(B)

Distortion
Image height (mm)

3.27

2.45

1.63
555nm

0.82

-5.0  -2.5  0.0  2.5  5.0
Distortion (%)
(C)

**FIG. 13B**

**FIG. 14A**

Spherical aberration

Astigmatism
Image height (mm)

Distortion
Image height (mm)

(A)

(B)

(C)

**FIG. 14B**

**FIG. 15A**

Spherical aberration

Astigmatism
Image height (mm)

Distortion
Image height (mm)

(A)

(B)

(C)

**FIG. 15B**

**FIG. 16A**

Spherical aberration

Astigmatism
Image height (mm)

Distortion
Image height (mm)

650nm

610nm

555nm

510nm

470nm

435nm

S(Sagittal)

T(Tangential)

555nm

Focus point deviation (mm)
(A)

Focus point deviation (mm)
(B)

Distortion (%)
(C)

**FIG. 16B**

**FIG. 17A**

FIG. 17B

FIG. 18A

FIG. 18B

200

201

100

**FIG. 19**

300

200

301

**FIG. 20**